# EUROPEAN PATENT APPLICATION

(11) **EP 4 813 213 A1**
(43) Date of publication of application: **30.09.2026**
(21) Application number: 25193465.9
(22) Date of filing: 01.08.2025
(51) Int. Cl.: A23K 10/18, A23K 20/174, A23K 20/20, A23K 50/10

(54) **SLOW-RELEASE FEED SUPPLEMENT BOLUS WITH ACTIVE YEAST**

(30) Priority: 26.03.2025 US 202519091354
(71) Applicant: Techmix, LLC, Stewart, Minnesota 55385 (US)
(72) Inventor: Muysson, David J., Minnetonka, 55305 (US); Garcia-Lastra, Rodrigo, 39700 Castro Urdiales (ES); Upah, Nathan C., Clutier, 52217 (US); Nelson, Michael L., Waconia, 55387 (US); Kolstad, Bradley W., Lester Prairie, 55354 (US)
(74) Representative: Durán-Corretjer, S.L.P.

(57) **Abstract**

A slow-release bolus product administered to the reticulo-rumen of a ruminant animal like a cow containing dried live active yeast particles, vitamins, and optional minerals for enhancing the health, nutrition, and feed intake of the animal prior to a lactation cycle post calving and to improve commercial milk production, or for enhancing the health, nutrition, and feed intake of a ruminant animal after a triggering stress event.

## Description

### Cross-Reference to Related Applications

This application claims priority to U.S.S.N. 19/091,354, filed on March 26, 2025, the contents of which is hereby incorporated by reference in its entirety. U.S.S.N. 19/091,354 is a continuation-in-part of U.S.S.N. 18/536,601 filed on December 12, 2023, which is a continuation-in-part of U.S.S.N. 18/080,371 filed on December 13, 2022, both of which are hereby incorporated by reference in their entirety.

### Field of the Invention

The present invention relates generally to feed supplement preparations for administration to ruminant animals and, more particularly, to a solid tablet or bolus that provides a slow release of dried live active yeast particles, vitamins, and optionally trace minerals into the reticulo-rumen of ruminant animals for the mitigation of inflammatory effects associated with the prepartum period responsible for causing a reduction in dry matter intake and exacerbating the prevalence of postpartum metabolic diseases, especially during a time period prior to the birthing of the newborn ruminant animal.

### Background of the Invention

Proper nutrition is fundamental for healthy and productive ruminant animals like cattle. Properly balanced diets containing forage and feed provide most of the necessary nutrients for energy and protein to the animal. But minerals and vitamins also play crucial roles in optimizing the health, growth, and productivity of the animal. Macro-minerals like calcium, phosphorous, magnesium, potassium, sodium, chlorine, and sulfur, as well as micro trace minerals like copper, zinc, selenium, iodine, manganese, cobalt, and iron aid a variety of beneficial functions like bone formation, energy metabolism, enzyme function, nervous system regulation, electrolyte balance, protein synthesis, iron metabolism, immune function, hemoglobin formation, and oxygen transport within the animal. A number of bolus products exist in the market for supplementing such macro-minerals and micro trace minerals for ruminant animals.

Vitamins represent organic compounds that are necessary for various metabolic processes within ruminant animals. Vitamins A, D, E, B-complex, and C all play an important role for animal health. While they might be contained in the feed and forage consumed from the animal's diet, they often need to be supplemented, particularly when the animal is suffering from heat, stress, or duress. Vitamin supplements are available in the market.

But farmers raising and caring for large numbers of livestock ruminant animals face challenges in caring for multiple animals that may have differing nutritional needs, inconsistent levels of dry matter intake, or are scattered over a large pasture. Tailoring different supplemental feed rations set out for animals contained in a pen or pasture can be imprecise or inefficient for ensuring that the correct level of nutrition is delivered to each animal.

Another challenge faced by livestock farmers is the nutritional needs of their pregnant ruminant animals prior to the delivery of their newborn offspring ("prepartum"), or after they deliver their newborn offspring ("postpartum") when they will need to produce colostrum and milk for their offspring during the ensuing lactation cycle. Mother domesticated animals, including dairy cows, lactate following the birth of their baby calves ("parturition"). Such lactation involves the secretion of milk by the mother cow from her mammary glands and the resulting amount of time that the mother cow lactates to feed her young calf. The chief purpose of lactation is to provide nutrition and immune protection to the calf after birth. Due to lactation, the mother-calf pair can survive even if food is scarce or too hard for the calf to obtain.

In the case of production animals like dairy cows, they will also be asked to produce significant quantities of milk during the lactation cycle for commercial purposes. It is typical to administer to such cows after calving propylene glycol to boost their energy levels, and calcium boluses to increase their blood calcium levels for treating hypocalcemia. However, such cows often suffer from a variety of maladies like hormonal imbalances, reduced feed intake, and systemic stress during the 45-60-day "dry cow" period prior to calving. Especially within the approximately 21-day "close-up" period during the dry-cow period immediately before calving, the cows will experience more-concentrated nutrient needs to make up for their reduced appetites, reduced rumen capacity, and declining caloric intakes. Farmers typically try to manage the cow's diet before calving, particularly with regard to mineral and fiber levels, to reduce the occurrence of hypocalcemia and other disorders after the calves are delivered. But this is not always possible. It would therefore be beneficial to specially treat the cows during this close-up dry-cow period with vitamins and minerals to reduce their health problems and enhance their nutrition during the fresh-cow lactation period after calving.

Another acute problem associated with cows is that in the days leading up to parturition, their dry matter intake decreases, in some cases profoundly. As selection for higher-producing genetics for breeding continues to be emphasized by the industry, the severity of this periparturient dry matter intake suppression becomes of greater consequence. Dry matter intake depression of over 50% in the 24-28 hours prior to calving is also not uncommon. However, it is not unusual for cows to have much longer periods of dry matter intake depressions, periods that can last multiple weeks prepartum, and be 1-30% in severity. Moreover, dry matter intake reduction of 20-25% in the first 24-48 hours after calving is common, independent of calcium status. Should the dry matter intake not increase in concert with milk production, then the fresh cow is at an increased risk for hypocalcemia (milk fever), displaced abomasum, ketosis, and poor lactational performance.

Dry matter intake and nutrient absorption following calving are also influenced by the transition of the rumen microflora within the cow to a diet greater in carbohydrate content, specifically rapidly fermentable starch, and lower in fiber than she was exposed to prepartum. To rapidly foster the growth and prefoliation of starch digesting bacteria in accordance with energetic demands, there is a need for a dietary supplement that acts as food for these bacteria and ultimately enables the cow to maintain a higher level of dry matter feed intake and resulting in more available energy to support lactation in the immediate period after calving.

It is well known that yeasts can be used to break down the starch contained within agricultural byproducts like flour and grains. Thus, U.S. Patent No. 3,843,800 issued to Langejan discloses active dried baker's yeasts with higher retained activity levels used to bake bread and other baking products. It causes the bread to rise by converting fermentable sugars present in the dough into carbon dioxide and ethanol. Given the high dry matter content of such active dried yeast, the yeast product is more stable than other forms of yeast like instant yeast prior to its rehydration and therefore is suitable for use in warmer-temperature countries. It also does not need refrigeration. However, such live dried active baker's yeast particles require a separate rehydration step, and they cannot be mixed into the dry ingredients of a product, prior to their rehydration, as readily as dried live active yeasts can be incorporated into product mixtures. *Saccharomyces cerevisiae* is a common yeast variety used in baker's yeasts. It is a common form of brewer's yeast used in the fermentation of beer. See Paul P. Sniegowski, et al. "Saccharomyces Cerevisiae and Saccharomyces Paradoxus Coexist in a Natural Woodland Site in North America and Display Different Levels of Reproductive Isolation from European Conspecifics," FEMS Yeast Research, vol. 1, pp. 299-306 (2002).

Dead yeast microorganisms can be used as feed supplements for dairy cows and other ruminant animals as a source of vitamins and organisms for animal health. Published PCT Application WO 2012/017363 filed by Cherry et al. discloses tablets for delivering probiotic dead yeast microorganisms, prebiotic oligosaccharides or polysaccharides, and vitamins to ruminant animals via their drinking water. The tablets can contain such probiotics and prebiotics, along with a citric acid form of an acid constituent and a sodium bicarbonate base constituent pairing that produce effervescence. The tablets are dropped into water to effervesce with the resulting solution added to the drinking water trough used by a group of cows. The probiotic microorganisms float inside the water trough for consumption by the cows and the effervescence may be meant to speed up the absorption of the probiotic by the animal.

Dried live active yeast particles in the form of feed supplements are also used within the industry for addition to the cow's feed ration. In some applications, such dried live active yeasts sitting inside the reticulo-rumen of the cow can make the forage and grains consumed by the cow easier to digest in order the increase the dry matter intake by the cow. Such dried live active yeast particles may be of the *Saccharomyces cerevisiae* variety with the yeast and other ingredients contained in the feed supplement granulated to facilitate its admixture by the farmer with the other feed ingredients for the cow's diet. Lallemand S.A. of Toulouse, France is one such manufacturer. Moreover, Lallemand coats some of its dried live active yeast products with, e.g., a 50:50 mixture of stearic acid and palmitic acid to increase the shelf life of the product. See European Patent No. 2,099,898 issued to Degre et al., and Published PCT Application WO 2001/068808 filed by Durand et al., both of which are hereby incorporated by reference in their entirety within this Application.

Abd-Talib et al, "Survival of Encapsulated Probiotics Through Spray Drying and Non-Refrigerated Storage for Animal Feeds Application," Agricultural Sciences (vol. 4, no. 5B, pp. 78-83) (2013) discloses a research study directed to a process for *spray drying* probiotics with the resulting product used in animal feeds. He discloses a couple of different experiments conducted under the research study. First, the probiotics were dispersed into coconut oil using a homogenizer at 3000 rpm for 10-15 minutes. Then the coconut oil-probiotic mixture was mixed up with a water-phase mixture using a homogenizer at 3000 rpm for 10 minutes. This formulation was transferred into a petri dish containing agar for each type of probiotic with the number of probiotic colonies grown in the petri dish calculated after 24 hours.

Separately, a Formulation A "encapsulation agent" containing gum Arabic, gelatin, and coconut oil, or a Formulation D "encapsulation agent" containing gelatin, lecithin, and coconut oil, were *mixed with the probiotic particles* with the *resulting admixture* passed through a spray dryer at an inlet temperature of 110 °C and an outlet temperature of 70-75 °C to reduce the moisture content of the resulting powder below 4%. These Formulations A and D were determined by Abd-Talib to be the only stable encapsulation agents that were tested. The resulting emulsified, spray-dried probiotic product exhibited a reduction in number of cells from 2.99 x 10⁹ colony forming units/ml ("cfu/ml") to 7.4 x 10⁷ cfu/ml at room temperature after a two-week period. However, it is highly doubtful that a spray drying process is capable of producing the type of uniformly coated product like Applicant's dried active yeast particles that are uniformly coated around their exterior by a hydrophobic fat or fatty acid substance like vegetable wax, preferably Carnauba wax, without resort to spray drying. Instead, Abd-Talib's formulations consist of an admixture of probiotic particles and emulsion molecules next to each other that will exit from the spray dryer nozzle in a similarly discrete arrangement. The resulting powder product is just as likely to have the probiotic particles surrounding molecules of the emulsion as the emulsion molecules to surround the probiotic particles. Indeed, a spray drying process is more likely to remove moisture from a product than to coat it. Thus, it is doubtful that Abd-Talib's products satisfy his own definition of "encapsulation."

Therefore, the probiotics tested by Abd-Talib do not seem to be coated with the A or D Formulation materials as that term is normally understood, and he appears to use the word "encapsulation" in a more generalized sense to suggest some kind of shelf stability of the probiotic powder product. He does not seem to spray his material around the exterior of the probiotic particles. Moreover, Abd-Talib seems to derive much of the reported shelf stability of his product by means of the moisture reduction of his probiotic product produced by his spray drying process. In any case, the results reported by Abd-Talib suggest that his probiotic particle powder is, in fact, not very protected. Only 19,000,000 cfu/ml of the cells of the probiotic microorganism remained after two weeks out of the 2,990,000,000 cfu/ml starting number. This 2,971,000,000 cfu/ml reduction in number of cells reflects a *99.3%* reduction in cell numbers which does not represent much of a protective coating for the probiotics, particularly in light of the mere two-week time period employed in Abd-Talib's experiment.

Within the animal nutrition industry, it is often easier to administer vitamins, minerals, and dried live active yeast particles to cows and other ruminant animals in the form of a bolus or tablet, instead of by an injection or liquid supplement. Such bolus contains a premeasured dose of the calcium compound or dried live active yeast particles for producing a specified concentration of the calcium or dried live active yeast particles within the animal's reticulo-rumen. The bolus may be conveniently swallowed by the animal without the need for forcing a liquid dose into the animal's mouth, or injecting a dose into the animal's blood stream. However, the process for producing boluses necessarily results in elevated temperatures and pressures during the manufacturing process that can readily reduce the viability of the dried live active yeast particles. Thus, while it would be highly beneficial to the farmer to provide a bolus containing a premeasured dose of vitamins and minerals in combination with the dried live active yeast particles that can be readily administered to the mother cow following calving to enhance her health and nutrition for the ensuing lactation cycle. It is also necessary to protect the viability of the dried live active yeast particles contained inside the bolus from heat and pressure condition during the bolus manufacturing process. The dried live active yeast particles would break down the starch within the forage sitting in the reticulo-rumen of the cow to make the forage easier to digest by the cow to increase her dry matter intake for colostrum and milk production for the newborn calf.

A bolus represents a solid pill or tablet containing a pre-measured dose of a medicine or other substance. It can be swallowed by the ruminant animal, and it therefore constitutes a convenient delivery mechanism that does not require injection, inhalation, or other administrative process for the animal.

But in some cases, the contents of the bolus is meant to be administered gradually to the animal over an extended time period, instead of being delivered to the animal all at once. The farmer might wish to avoid the need to administer successive boluses to the animal over multiple days, especially if the animal is inaccessible to the farmer over a large pasture or grassland, or the animal is under stress that could be worsened by repeated administrators of boluses. Mechanical-based slow-release bolus devices are well known in the industry. See U.S. Patent No. 8,329,206 issued to Leech et al. disclosing such a bolus device containing a plastic or metal housing with an open end and an internal chamber therein. A number of tablets containing the beneficial substance coated with wax or resin are stored inside the chamber. The rumen juices inside the rumen of the ruminant animal that swallows the bolus device gradually degrade the wax or resin coating on the most-forward tablet to release the beneficial substance to the animal through the open end of the housing. The next tablet inside the chamber is then exposed to the rumen juices to gradually cause the degradation of its coating. The tablet sizes may be increased across the chamber length to increase the dosage of the beneficial substance over time administered to the animal. See also U.S. Patent No. 4,642,230 issued to Whitehead et al.

Another popular design for mechanical slow-release bolus devices comprises a spring piston contained inside the chamber for pushing the tablets containing the beneficial substance towards the open end of the housing. Flexible retention arms attached to the housing keep the device inside the rumen of the ruminant animal over the period of time during which the beneficial substance is to be released. See U.S. Published Application 2005/0064032 filed by Lowe et al. and U.S. Patent Nos. 5,277,912 issued to Lowe et al., and 5,162,116 issued to Shepherd.

Other mechanical slow-release bolus devices contain a densifying agent for keeping the device inside the rumen by means of weight. See U.S. Patent No. 4,871,844 issued to Eckenhoff. U.S. Patent No. 4,381,780 issued to Holloway discloses a mechanical slow-release bolus device in which the tablets are not coated with a degradable wax or resin material, but instead disintegrable dividers for forming compartments inside the housing chamber are successively degraded by the animal's rumen juice to release the next tablet dosage. An alternative housing is provided by U.S. Patent No. 4,220,152 issued to Dresback having two closed ends, but pores formed inside the cylindrical housing wall are filled with a hydrogel that are degraded by the rumen juice and then allow the beneficial substance to pass therethrough to the animal's rumen.

Chemical devices are also known for slow-release boluses. For example, U.S. Patent No. 4,066,754 issued to Chou discloses such a bolus in which the beneficial agent is bound together by zein, a vegetable proteinaceous material, instead of by conventional binding agents, to deliver the beneficial agent to the animal over a 4-15-day period. A dense filter material is also included inside the bolus to keep the bolus inside the rumen during the extended dosage period, instead of being passed by the animal in the ordinary course.

U.S. Published Application 2024/0252565 filed by Tierney et al. discloses a water-soluble or water-disbursable chemical bolus containing seaweed extracts enriched in bioactive agents, plus vitamins and minerals. The bolus delivers the bioactive agents to the animal over 1-150 days. Other chemical slow-release bolus products constitute a core containing the beneficial agent like a growth promoter, therapeutic substance like zinc oxide, antibiotic, or vitamin E that is coated with a water-insoluble wax matrix or binder to slow down the release of the substance to the rumen of the animal. See U.S. Patent No. 5,720,972 issued to Munday; United Kingdom Published Application 2,326,825 filed by Porter; New Zealand Published Application 278,977 filed by Munday; European Published Application 090,578 filed by Eli Lilly; and PCT Published Application WO 2005/051487 filed by Rumbol Products Ltd.

It would be highly advantageous to provide a biologically-induced slow-release bolus product containing dried live active yeast particles that can break down the forage and feed ingredients inside the ruminant animal's reticulo-rumen to release energy and nutritional ingredients, and one or more vitamins and optional minerals to improve the health and nutrition of the animal where the ingredients contained inside the bolus are administered gradually over a predetermined time period at a measured dosage without the use of a wax or zein degradable coating that may be unreliable.

### Summary of the Invention

A biologically induced slow-release bolus product to be administered to a pregnant ruminant animal like a cow for enhancing her nutrition and health prior to calving to improve her production of milk during the lactation cycle after calving is provided by the invention. The product is administered pre-calving to the pregnant female ruminant animal for the release of its ingredients over a predetermined extended dosage time period at a pre-measured dosage. The slow-release bolus product contains dried live active yeast particles having their viability preserved in a pressed solid bolus dosage form, along with one or more vitamins and optional trace minerals. The product also contains a degradable binding agent like Dolomite clays, Bentonite clays, Kaolin clays, zeolites, or diatomaceous earth that are gradually degraded by rumen juices inside the reticulo-rumen of the cow to which the bolus product has been administered to release the beneficial ingredients in the bolus to the cow over the extended dosage period. Alternatively, calcium carbonate and magnesium oxide may be used in combination to provide this binding agent. Finally, the bolus product contains a quantity of metal powder for adding weight to the bolus product to help to maintain it inside the cow's reticulo-rumen during the extended dosage period, instead of the bolus being passed by the cow through its intestinal system in the normal course. The dried live active yeast particles are preferably coated with a hydrophobic fat or fatty acid material to protect them within the bolus from being adversely affected by any trace minerals contained inside the bolus, as well as the elevated pressures applied during the bolus manufacturing process.

In a preferred embodiment of the slow-release bolus product administered to a pregnant female cow, the bolus product contains dried live active yeast particles coated with the hydrophobic fat or fatty acid substance, Vitamin B7, Vitamin B12, zinc oxide, and manganese oxide, the Dolomite clay (or calcium carbonate/magnesium oxide) binder, and iron oxide for adding weight to the bolus. Such bolus product is administered to the pregnant female cow in the form of a single bolus during her close-up dry cow period about 21 days before calving.

In another embodiment of the slow-release bolus product of the present invention, the bolus product may be administered to a ruminant animal within an extended dosage period following a triggering stress event like a pregnant female ruminant animal, who gives birth to a calf; a young ruminant animal, who is transported to an animal feed lot; or a young or adult ruminant animal suffering from heat or other weather event stresses, illnesses, or side effects of being in close proximity to other ruminant animals. Such bolus product contains dried live active yeast particles coated with the hydrophobic fat or fatty acid substance, one or more vitamins like Vitamin B7, Vitamin B12, other complex-B vitamins, Vitamin A, Vitamin E, or Vitamin C, optional micro trace or macro minerals like zinc, cobalt, or magnesium, a Dolomite clay binder, and iron oxide for adding weight to the bolus. Such bolus product is administered to the ruminant animal triggered by the stress event about 5-21 days following the triggering stress event. By being able to administer a single dose of the slow-release bolus product to the ruminant animal that has been triggered by the stress event, the ruminant animal can be left alone for treatment by the beneficial ingredients contained inside the slow-release bolus product throughout the extended dosage period, while its health is restored and feed intake improved without further doses or other veterinary treatments that might aggravate the stress condition of the ruminant animal.

### Brief Description of the Drawings

In the accompanying drawings:
Figure 1 is a schematic representation of the "dry-cow" and "fresh-cow periods for a dairy or beef cow with the fresh-cow period following calving constituting the cow's lactation cycle.
Figure 2 is a graphical depiction of an *in vitro* release test for the slow-release bolus product of the present invention, depicting the reduced weight of the bolus over time.
Figure 3 is a graphical depiction of an *in vitro* test for the concentration of the viable dried live active yeast particles contained inside the slow-release bolus product over time.
Figure 4 is a graphical depiction of an *in vivo* test bolus recovery test of the slow-release bolus product conducted with cannulated cows, depicting the reduced weight of the bolus over time.
Figure 5 is a graphical depiction of a field test of the slow-release bolus product, representing the average daily milk production over time for cows administered the bolus product vs. the control cows.
Figure 6 is a bar graphical depiction of the bolus cows vs. the control cows of Figure 5.
Figure 7 is a graphical depiction of a farm trial of the slow-release bolus product, representing the average daily milk production over time for primiparous cows constituting the cows administered the bolus product vs. the control cows.
Figure 8 is a graphical depiction of a farm trial of the slow-release bolus product, representing the average daily milk production over time for multiparous cows constituting the cows administered the bolus product vs. the control cows.
Figure 9 is a bar graphical depiction of the average daily milk production for the combined primiparous and multiparous cows from the Figures 7 and 8 farm trials for the cows administered the bolus product vs. the control cows.
Figure 10 is a bar graphical depiction of the health of the combined primiparous and multiparous cows from the Figures 7 and 8 farm trials in terms of incidents of mastitis and metritis for the cows administered the bolus product vs. the control cows.

### Detailed Description of the Preferred Embodiments

The present invention provides a unique formulation for a biologically-induced slow-release bolus product to be administered to a ruminant animal to improve its health and nutrition for a pregnant female ruminant animal in preparation to be productive during the ensuing lactation cycle after her baby ruminant animal is born where the product is administered pre-calving to the pregnant female ruminant animal for the release of its ingredients over a predetermined time period at a pre-measured dosage. The slow-release bolus product contains dried live active yeast particles having their viability preserved in an anhydrous pressed solid bolus dosage form, along with one or more vitamins and optional trace minerals. In a preferred embodiment administered to a pregnant female cow, the slow-release bolus product contains dried live active yeast particles, Vitamin B7, Vitamin B12, zinc oxide, and manganese oxide that is administered to the pregnant female cow in the form of a single bolus during her close-up dry cow period about 21 days before calving.

For purposes of this Application covering the slow-release bolus product that is administered to ruminant animals, the term "reticulo-rumen" needs to be clarified. A ruminant animal has four "stomachs," the first two of which are the reticulum and the rumen that are not completely separated. When the bolus is swallowed by the animal, it is highly probable that it will be deposited into the reticulum due to its density. As the bolus is dissolved, the resulting ingredients inside the bolus will be distributed into the reticulum and the rumen. The vast majority of animal feed will reside inside the rumen, and this is where the yeast particles contained inside the bolus will act. The animal nutrition and dairy industries uses the term "reticulo-rumen" to describe the reticulum and the rumen in conjunction, because they are not always discrete organs and digestive activities. By contrast, once the digesta leaves the rumen inside the animal, it flows in sequence through the rest of the gastro-intestinal tract. Applicants have incorporated this term "reticulo-rumen" in their claims to reflect the fact that the bolus of the present invention is not guaranteed to wind up inside the animal's reticulum, as opposed to the rumen, as this concept is understood within the industry.

For purposes of the present invention, "ruminant animal" means any cloven-hoofed herbivorous grazing or browsing mammal that is able to acquire nutrients from plant-based food by fermenting it in a specialized stomach prior to digestion, principally through microbial actions. The process, which takes place in the front part of the digestive system, and therefore is called foregut fermentation, typically requires the fermented ingesta known as "cud" to be regurgitated and chewed again. The process of rechewing the cud to further break down plant matter and stimulate digestion is called "rumination." Examples of such ruminant animals include, but are not limited to cows, cattle, goats, sheep, buffalos, giraffes, deer, gazelles, antelopes, and camels.

As used in this application, "bolus" means any solid pill or tablet containing a premeasured dose of at least one active ingredient like vitamins, minerals, or dried live active yeast particles meant to be administered to a ruminant animal like a cow.

For purposes of the present invention, "extended dosage period" means the time period during which the slow-release bolus product administered to the cow delivers its active beneficial ingredients at a continuous rate throughout that time period.

While this Application discusses the dietary feed supplement bolus of the present invention for administration to a cow or "pregnant female ruminant animal," this is done for the convenience of the reader by the way of example, for it should be understood that any other ruminant animal may be administered to bolus product. Other ruminant animals like goats, sheep, buffalo, and camels also produce milk during their lactation cycle after calving for commercial purposes. Moreover, all mother ruminant animals, including beef cattle, are capable of becoming pregnant during which after bearing their baby ruminant animal, they produce milk during a lactation cycle to feed and provide proper nutrition to their newborn animals without commercial milk production.

It has been found that administering the slow-release bolus product containing dried live active yeast particles, at least one vitamin, and optional trace minerals to the cow is more successful if a stable pressed solid bolus is used, so that the animal swallows the bolus whole into the the reticulo-rumen, wherein it sinks due to its density to be held in place by the reticulo-rumen wall and dissolves in the fluid contained within the reticulo-rumen. The slow-release composition, namely the slow-release bolus product, ensures that the ingredients are delivered to the cow gradually over an extended time period at a predetermined dosage, instead of all at one time. Thus, as used in the present application, "slow-release" means the ingredients in the bolus product are released to the cow following administration over an extended dosage period, such as over about 5-60 days, as opposed to, for example, a product which releases the ingredients all at once. In some embodiments, the extended time period over which the ingredients are delivered to the cow may be about 60 days, or about 42 days, or about 21 days, preferably about 21 days. The slow-release bolus product of the invention contains one or more components which serve to prolong the release of the ingredients to the cow.

The slow-release bolus product of the present invention further contains dried stable active yeast to a pressed solid bolus dosage form. The dried live active yeast particles are released inside the reticulo-rumen of the cow during the extended dosage period and break down the feed and forage consumed by the cow to increase its feed and forage intake and its health and nutrition for enhancing its milk production during the lactation cycle post-calving. Thus, the product not only provides needed vitamins and optional trace minerals to the ruminant animal, but it also produces a previously undocumented positive increase in dry matter feed intake and milk production. In this manner, the supplement treats the three biggest problems encountered by cows prior to calving: a destabilized rumen environment, the need to mediate dry matter intake, and the need to improve metabolic disease counteractions. By administering the slow-release bolus product to the ruminant animal prior to calving, her health and nutrition is improved post-calving in direct support of her productive lactation cycle for the benefit of nursing her newborn ruminant animal, and production of commercial milk quantities for the direct economic benefit to the farmer. It is believed that the yeast successfully enhances microbial action stimulating rumen fermentation.

Please note that the use of the term "calving" in this Application refers to the birth of the newborn ruminant animal by the pregnant female ruminant animal even if the progeny of that particular type of ruminant animal is not generally referred to as a "calf."

As used herein, the term "about" means within ±10%, preferably within ±5%, more preferably within ±2%, of the stated value.

The yeast particles for purposes of the dietary feed supplement bolus of the present invention should be in the form of dried live active yeast particles. This means that, unlike active yeast, they have been dehydrated by pressing and drying the moisture content to make the yeast particles dormant. Such dried live active yeast particles do not need to be refrigerated to maintain their viability, unlike fresh yeast particles. Such dried live active yeast particles contained inside the bolus are then revived from their dormant state to an active state when they are mixed with warm water contained inside the reticulo-rumen of the cow after the bolus is swallowed by the cow. Were fresh yeast to be incorporated instead into the dietary feed supplement bolus of the present invention, then the bolus of the product would exhibit a considerably shorter shelf-life stability for purposes of the yeast component. This would adversely affect degradation of forage materials inside the reticulo-rumen of the cow that is fed the bolus, thereby reducing the energy state of the animal and its dry matter intake. The yeast species must be capable of breaking down the forage materials contained in the cow's reticulo-rumen to help with the cow's digestion, while moderating the rumen pH to a range of about 5.8 - 6.5.

Such dried live active yeast particles should preferably comprise the *Saccharomyces cerevisiae and Saccharomyces boulardii* varieties of yeast. Such *Saccharomyces cerevisiae* variety is found in nature as part of the *Saccharomyces sense stricto* complex. Other varieties include *Saccharomyces paradoxus, Sacchaormyces bayanus, Saccharomyces carinocanus, Saccharomyces kudriavzevii, and Saccharomyces mikatae.* A number of different species of the *S. cerevisiae* variety are known and could be used for purposes of the dietary feed supplement bolus. However, the *S. cerevisiae* species denominated CNCMI-1077 is preferred.

Dried live active yeast particles are adversely affected by trace minerals, as well as the elevated pressures applied during the manufacturing process for making the bolus. In order to protect the viability of these dried live active yeast particles contained in the bolus, the yeast is preferably in the form of micro-granules of dried live active yeast particles that are coated with a homogeneous hydrophobic substance such as a hydrophobic fat or fatty acid material that stabilizes the dried live active yeast particles against physical and chemical stresses including heat and compression. Moreover, the coating material may also act to slow down the degradation within the cow's reticulo-rumen of the bolus product due to the rumen juices, thereby facilitating the slow-release characteristic of the bolus product. Such hydrophobic fat or fatty acid material contributes to a reduction in the degradation of cells in the dried live active yeast particles and enables them to remain viable when the yeast particles are homogenously incorporated into the pressed solid bolus, and it protects the yeast particles from the adverse effects of any micro trace minerals contained inside the bolus.

Such hydrophobic fat or fatty acid material comprises long-chain fatty acids like oleic acid, palmitic acid, stearic acid, linoleic acid, or linolenic acid. More preferably, two or more of those long-chain fatty acids may be used in combination with each other. The admixture of long-chain fatty acids should uniformly coat the exterior of the dried live active yeast particles in order to provide them protection from the deleterious effects of the trace minerals like iron oxide and the increased pressure levels applied to make the bolus product.

In a preferred embodiment of the invention, the hydrophobic fat or fatty acid protective material surrounding the dried live active yeast particles may be a mixture of stearic acid and palmitic acid, even more preferably a 50:50 mixture of stearic acid and palmitic acid. See European Patent No. 2,099,898 issued to Degre et al.; and PCT Published Application WO 2001/068808 filed by Durand et al, both of which are incorporated by reference in their entirety by this Application. Lallemand S.A. of Toulouse, France commercializes a product comprising dried live active yeast particles that are coated with such a 50:50 mixture of palmitic acid and stearic acid under its Levucell SC^{®} trademark that is suitable for this application.

For purposes of the slow-release bolus product of the present invention, it should preferably deliver about one gram per day of the dried live active yeast particles to the pregnant female ruminant animal. Based upon a 120 gram bolus, whose ingredients are to be administered over a 21-day extended dosage period, the coated dried live active yeast particles should comprise about 8.25-25.00% wt of the bolus composition, preferably about 13.0-19.0% wt, even more preferably about 17.0-18.0% wt. Another important characteristic of the dried live active yeast particles is their potency - typically measured in terms of colony forming units ("cfu"). For purposes of the slow-release bolus product of the present invention, based upon a 120 gram bolus, whose ingredients are to be administered over a 21-day extended dosage period, the dried live active yeast particles should exhibit about 147-714 billion cfu, preferably about 150-380 billion cfu, even more preferably about 175-300 billion cfu.

Besides the dried live active yeast particles, the slow-release bolus product should also contain one or more vitamins. Such vitamins act to supplement the levels of vitamins derived by the cow from the feed and forage consumed by the animal, such as during the extended dosage period prior to calving and/or during a lactation cycle after calving. Such supplemental vitamins may include fat-soluble vitamins like Vitamin A that is crucial for vision, immune function, and reproductive health; Vitamin D that is essential for calcium absorption and bone health; and Vitamin E that is an important antioxidant that supports immune function in the mother cow.

The supplemental vitamins added to the slow-release bolus product may also include water-soluble vitamins like B-Complex Vitamins that are mostly synthesized by rumen microbes, but they may need supplementation in some cases for animal health; and Vitamin C that is typically synthesized by cattle, but it should be supplemented to help the animal to overcome stress.

For purposes of the slow-release bolus product administered to pregnant cows, the bolus preferably incorporates Vitamin B7, commonly known as "Biotin." Biotin is a B-complex vitamin that helps the cow's body to break down food into energy. This is particularly useful for pregnant cows who typically suffer from decreased appetite during the close-up dry cow period prior to calving that yields decreased nutritional and energy intake. Biotin also supports proper function of the nervous system, liver, eyes, hair, and skin of the cow. While meats, eggs, fish, seeds, nuts, and some vegetables commonly provide Biotin to humans, and animal feed rations may normally be supplemented to contain Biotin, ruminant animals like pregnant cows may benefit from additional supplementation of Biotin. By targeting a supplemental 20 mg/day of Biotin for the animal, a 120 gram slow-release bolus administered to deliver the Biotin over a 21-day extended dosage period should contain about 0.175-0.700% wt Biotin, preferably about 0.26-0.53% wt Biotin, even more preferably about 0.35% wt Biotin.

The slow-release bolus product of the present invention should also incorporate Vitamin B12. Vitamin B12 is an essential vitamin that the cow's body needs to make red blood cells, protect its nerves, and produce DNA. It is commonly found in animal-based food products. Because cows and other ruminant animals are herbivores, they need Vitamin B12 supplements. This is even more true for pregnant cows during the close-up dry cow period. Based upon a supplemental target of about 350 µg/day of Vitamin B12, a 120g slow-release bolus should contain about 0.0044-0.0088% wt Vitamin B12, preferably about 0.0053-0.0070% wt Vitamin B12, even more preferably about 0.0062% wt Vitamin B12.

The slow-release bolus product of the present invention may optionally incorporate one or more minerals for enhancing the health and nutrition of the cow. Micro trace minerals enhance the health and nutrition of the cow during the extended dosage period prior to calving and during a lactation cycle by the cow after calving. Micro trace minerals include copper (Cu) that is essential for enzyme function and iron metabolism; zinc (Zn) that is vital for immune function and wound healing; selenium (Se) that is an important antioxidant and supports immune function; iodine (I) that is necessary for thyroid hormone production; manganese (Mn) that supports bone formation and enzyme function; cobalt (Co) that is required for the synthesis of Vitamin B12 inside the cow's reticulo-rumen; and iron (Fe) that is essential for hemoglobin formation and oxygen transport within the cow's body.

The optional mineral ingredients contained inside the slow-release bolus product may also include macro-minerals like calcium (Ca) that is essential for bone formation, muscle contraction, and milk production; phosphorus (P) that works in conjunction with calcium for bone health and energy metabolism; magnesium (Mg) that is important for enzyme function and nervous system regulation; potassium (K) that is crucial for electrolyte balance and muscle function; sodium (Na) that maintains fluid balance and aids in nutrient absorption; chlorine (Cl) that works with sodium to maintain fluid balance; and sulfur (S) that is necessary for protein synthesis and proper rumen function in the cow's body.

The slow-release bolus product may optionally include zinc oxide that provides bioavailability cofactors in support of many enzymes in the cow's energy metabolism. The associated zinc ions enhance the production of milk during the lactation cycle post-calving. At a target of about 428 mg/day of zinc, a 120g bolus should incorporate about 5-14% wt zinc oxide, preferably about 8-12% wt zinc oxide, even more preferably about 10% wt zinc oxide.

The slow-release bolus product for cows may also incorporate manganese oxide that similarly provides bioavailability cofactors in support of many enzymes in the cow's energy metabolism. The associated manganese ions enhance the production of milk during the lactation cycle post-calving. Based upon a target of about 354 mg/day of manganese, a 120g bolus should contain about 5-14% wt, preferably about 8-12% wt, even more preferably about 10% wt of manganese oxide.

An essential part of the slow-release bolus product of the present invention is the compositional ingredients for the bolus that provide that biologically induced slow-release composition mechanism, as binding agents. They preferably include Dolomite clays, Bentonite clays, Kaolin clays, zeolites, or diatomaceous earth that is gradually degraded by the rumen juices contained inside the cow's reticulo-rumen to release the dried live active yeast particles, vitamins, and optional minerals incorporated into the bolus into the cow's reticulo-rumen. Such Dolomite clay clays, Bentomite clays, Kaolin clays, zeolites, or diatomaceous earth material does not constitute a wax, resin, or zein proteinaceous vegetable material. Moreover, such materials function as a binding agent for the active ingredients contained inside the bolus that is resistant to degradation within the reticulo-rumen during the extended dosage period, instead of as a degradable coating that is characteristic of other slow-release bolus products known within the industry. Such Dolomite clays, Bentonite clays, Kaolin clays, zeolites, or diatomaceous earth material should comprise about 10-27% wt, preferably about 14-24% wt, even more preferably about 20% wt of the bolus composition. Thus, the compositional ingredients/binding agent is degradable by the rumen juices contained inside the cow's reticulo-rumen and gradually releases the particles of dried live active yeast, vitamins, and optional micro trace minerals from the bolus product into the cow at a predetermined dosage throughout the extended dosage period.

In an alternative embodiment of the present invention, the slow-release bolus product can contain organic chemical ingredients, instead of the Dolomite clays, Bentonite clays, Kaolin clays, zeolites, or diatomaceous earth, for providing the biologically induced slow-release composition mechanism. For example, instead of using Dolomite clays, calcium carbonate and magnesium oxide could be employed in combination where the calcium carbonate and magnesium oxide within the bolus composition are gradually degraded by the rumen juices contained inside the cow's reticulo-rumen to release the dried live active yeast particles, vitamins, and optional minerals incorporated into the bolus into the cow's reticulo-rumen. In this embodiment, the calcium carbonate should comprise about 7-18% wt, preferably about 14% wt of the bolus composition. The magnesium oxide should comprise about 2-8% wt, preferably about 5% wt of the bolus composition.

The chemical slow-release bolus product should also include an amount of powdered metal oxide as an inert agent to add weight to the bolus product so that it is maintained inside the cow's reticulo-rumen throughout the extended dosage period to gradually release the dried live active yeast, vitamin, and optional minerals ingredients to the cow's reticulo-rumen, instead of being quickly passed by the cow through its digestive and intestinal systems in the normal course. Such powdered metal oxide agent may comprise iron oxide, magnesium oxide, or zinc oxide, although iron oxide is preferred. When iron oxide is employed as the inert weight agent in the composition for the chemical slow-release bolus product, it should comprise about 10-30% wt, preferably about 15-25% wt, even more preferably about 20% wt powdered iron.

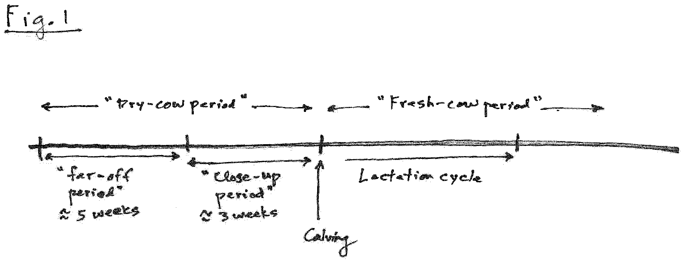

The slow-release bolus product gradually releases its dried live active yeast particles, vitamins, and optional minerals ingredients into the reticulo-rumen of the ruminant animal across the extended dosage period. For purposes of a cow, such extended dosage period corresponds to the close-up dry cow period immediately preceding calving and therefore prior to the cow's subsequent lactation cycle, as shown in Fig. 1. Within the dairy cow and beef cattle industries, this extended dosage period is generally considered to be about 21 days, although a longer period like 42 days might be appropriate under some circumstances. Moreover, an extended dosage period of about 60 days might be appropriate for other types of ruminant animals like buffalo, sheep, and goats.

The weight of the slow-release bolus product will generally be calculated based upon the appropriate extended dosage period for the particular type of ruminant animal to which it is to be administered. While a 120 gram bolus for a 21-day extended dosage period may be preferred within the industry for cattle and dairy cows, other extended dosage periods might be suitable for other types of ruminant animals. For example, 180- gram and even 210-gram boluses could be appropriate. Therefore, for purposes of this Application, the weight of the slow-release bolus product should be about 75-210 grams, preferably 120 grams. The weight percentages of the various ingredients contained inside the bolus should be calculated based upon the number of days within the extended dosage period.

The bolus product should also contain a predetermined dosage of the dried live active yeast particles, vitamins, and optional mineral ingredients that will be delivered during the extended dosage period to the ruminant animal's reticulo-rumen. This dosage should be delivered at a continuous rate through the extended dosage period.

The dietary feed supplement bolus composition may include other additive components. First, a lubricant is provided for the bolus manufacturing process, like magnesium stearate, calcium stearate, sodium benzoate, adipic acid, or polyethylene glycol. During the bolus manufacturing process, the bolus composition is squeezed into a mold and then a pressure of about 25-37.5 metric tonnes (27.5-41 tons) is applied to form a single bolus. Magnesium stearate is the preferred lubricant. If magnesium stearate or calcium stearate is used as a binder material, it should comprise about 0.5-5.0% wt of the bolus composition, preferably about 2.5% wt of the bolus composition.

Second, hydrogenated fat of rapeseed oil is added to the bolus composition during the manufacturing process as a lubricant, binder, and nutrient carrier. In some countries, the canola seed from which the oil is derived is known as "rapeseed." The hydrogenated fat of rapeseed oil thereof should comprise about 10-30% wt of the bolus composition, preferably about 20% wt of the bolus composition.

One successful formula for the slow-release bolus product of the present invention had the following range of ingredients, based upon a 120 gram bolus, shown in Table 1A.

**Table 1A**

| | **For 120 gram bolus** | | |
|---|---|---|---|
| **INGREDIENT** | **MIN (% wt)** | **MAX (% wt)** | **PREFERRED (% wt)** |
| Biotin (Vitamin B7) | 0.175 | 0.70 | 0.35 |
| Vitamin B12 | 0.0044 | 0.0088 | 0.0062 |
| Zinc Oxide | 5 | 14 | 10.0 |
| Manganese Oxide | 5 | 14 | 10.0 |
| Calcium Carbonate | 7 | 18 | 14.0 |
| Magnesium Oxide | 2 | 8 | 5 |
| Iron Oxide | 10 | 30 | 20 |
| Dried Live Active Yeast | 8.25 | 25 | 17-18 |
| Magnesium Stearate | 0.5 | 5 | 2.5 |
| Hydrogenated fat of Rapeseed Oil | 10 | 30 | 19.4 |

One example of a successful bolus product for administration to a dairy cow or beef cow in a single dose over a 21-day extended dosage period contains amongst other ingredients about 17.5% wt precoated dried live active yeast particles, about 0.35% wt Biotin (Vitamin B7), about 0.00613% wt Vitamin B12, about 10.0% wt zinc oxide, about 10.0% wt manganese oxide, about 14.5% wt calcium carbonate, about 5% wt magnesium oxide, about 20.0% wt iron oxide, about 2.5% wt magnesium stearate, about 19.4% wt hydrogenated fat of rapeseed oil.

One further successful formula for the slow-release bolus product of the present invention had the following range of ingredients, based upon a 120 gram bolus, shown in Table 1B.

**Table 1B**

| | **For 120 gram bolus** | | |
|---|---|---|---|
| **INGREDIENT** | **MIN (% wt)** | **MAX (% wt)** | **PREFERRED (% wt)** |
| Biotin (Vitamin B7) | 0.175 | 0.70 | 0.35 |
| Vitamin B12 | 0.0044 | 0.0088 | 0.0062 |
| Zinc Oxide | 5 | 14 | 10.0 |
| Manganese Oxide | 5 | 14 | 10.0 |
| Dolomite Clay | 10 | 27 | 20 |
| Iron Powder | 10 | 30 | 20 |
| Dried Live Active Yeast | 8.25 | 25 | 17-18 |
| Magnesium Stearate | 0.5 | 5 | 2.5 |
| Hydrogenated fat of Rapeseed Oil | 10 | 30 | 19.4 |

One example of a successful bolus product for administration to a dairy cow or beef cow in a single dose over a 21-day extended dosage period has about 17.5% wt precoated dried live active yeast particles, about 0.35% wt Biotin (Vitamin B7), about 0.00613% wt Vitamin B12, about 10.0% wt zinc oxide, about 10.0% manganese oxide, about 14.0% wt Dolomite clay, and about 20.0% iron power, about 2.5% wt magnesium stearate, about 19.4% wt hydrogenated fat of rapeseed oil.

Also provided is a method of use of a slow-release bolus in the form of a pressed shelf-stable solid pill or bolus administered into the reticulo-rumen of a pregnant female ruminant animal containing particles of dried live active yeast precoated with a hydrophobic fat or fatty acid substance with the coating of the hydrophobic fat or fatty acid material separate from the dried live active yeast particles prior to and during the material being sprayed around the exterior of the dried live active yeast particles, at least one vitamin source for supplementing the levels of that vitamin derived by the ruminant animal from the feed and forage consumed by her during the extended dosage period, optionally one or more micro trace minerals for enhancing the health and nutrition of the ruminant animal during the extended dosage period prior to calving and during a lactation cycle by the ruminant animal after calving, a binding agent that is degradable by the rumen juices contained inside the ruminant animal's reticulo-rumen for gradually releasing the particles of dried live active yeast, vitamins, and optional micro trace minerals from the bolus product into the ruminant animal at a predetermined dosage throughout the extended dosage period, and powdered metal oxide for adding weight to the bolus product, so that the bolus product is maintained inside the ruminant animal's reticulo-rumen throughout the extended dosage period; said method comprising:
(a) being presented with a pregnant female ruminant animal;
(b) administering to the pregnant female ruminant animal a dose of the slow-release bolus product during an extended dosage period prior to calving; and;
(c) wherein the slow-release bolus product is swallowed by the pregnant female ruminant animal to pass into the reticulo-rumen of the ruminant animal whereupon the slow-release functionality binding agent within the bolus product is gradually degraded by rumen juices inside the reticulo-rumen of the ruminant animal to release the dried live active yeast particles, vitamins, and optional micro trace minerals into the ruminant animal to break down the feed and forage consumed by the ruminant animal to increase its feed and forage intake during the extended dosage period, and pass the vitamins and optional micro trace minerals into the ruminant animal's bloodstream to improve its health and nutrition for enhancing its milk production during the lactation cycle post-calving.

In some embodiments, the method comprises a single administration of the slow-release bolus product to the pregnant female ruminant animal during the extended dosage period.

In some embodiments, the use of the slow-release bolus product may be non-therapeutic.

While the slow-release bolus product of the present invention has been discussed within the context of administering it to pregnant ruminant animals within an extended dosage period prior to calving in order to improve their feed intake and animal health and nutrition during that pre-calving extended dosage period to enhance their milk production during the subsequent lactation cycle post-calving, the slow-release bolus product could be administered to ruminant animals after calving to improve their health and nutritional state. For example, ruminant animals can be the subject of a variety of "stress events" that interfere with their feed intake and animal health and nutrition. First, by way of example, the mother dairy or beef cow who delivers a calf can experience lingering health maladies after giving birth to the calf (i.e., the stress event) that causes her to become sick or show less appetite for eating her feed and forage. This could occur despite the fact that she was administered the slow-release bolus product during the extended dosage period before she gave birth to her calf. Second, beef cows typically of 4-5 months of age, or even 16 months of age, are commonly trucked to a feedlot to add muscle bulk before they are sent to an animal processing operation to slaughter them for their meat and other byproducts. Such transport by truck, rail car, or other mode of transportation with close quarters with other ruminant animals and often within a hot, sweltering environment can cause stress for the young ruminant animals that interfere with their feed intake and health and nutritional state after they reach the feedlot. Third, young and older ruminant animals located on a farm can suffer from extreme heat or other weather events or illnesses that reduce their feed intake and health and nutrition. All of these stress events are all too common for ruminant animals within dairy and livestock operations that require human intervention, often with the skilled assistance of a veterinarian.

Such ruminant animals could be treated quickly and conveniently by the administration of a single-dose slow-release bolus product within an extended dosage period commencing with the stress event that triggered the illness, deficient feed intake, etc. malady. This extended dosage period commencing with the triggering stress event would necessarily occur after calving in instances where the ruminant animal is a former pregnant female animals, which delivered her calf. Moreover, it is not tied to any lactation cycle for the ruminant animal. For these applications, the extended dosage period for administration of the slow-release bolus product should be about 5-21 days.

Thus, also provided is a slow-release bolus product in the form of a shelf-stable solid pill or bolus administered into the reticulo-rumen of a ruminant animal within an extended dosage period following a triggering stress event, comprising:
(a) particles of dried live active yeast precoated with a hydrophobic fat or fatty acid substance with the coating of the hydrophobic fat or fatty acid material separate from the dried live active yeast particles prior to and during the material being sprayed around the exterior of the dried live active yeast particles;
(b) at least one vitamin source for supplementing the levels of that vitamin derived by the ruminant animal from the feed and forage consumed by the ruminant animal during the extended dosage period;
(c) optionally one or more micro trace or macro minerals for enhancing the health and nutrition of the ruminant animal during the extended dosage period following the triggering stress event;
(d) a binding agent that is degradable by the rumen juices contained inside the ruminant animal's reticulo-rumen for gradually releasing the particles of dried live active yeast, vitamins, and optional micro trace or macro minerals from the bolus product into the ruminant animal at a predetermined dosage throughout the extended dosage period;
(e) powdered metal oxide for adding weight to the bolus product, so that the bolus product is maintained inside the ruminant animal's reticulo-rumen throughout the extended dosage period;
(f) wherein the hydrophobic fat or fatty acid coating contributes to a reduction in the degradation of cells in the dried live active yeast particles and enables them to remain viable when the yeast particles are homogeneously incorporated into the bolus, and protects the yeast particles from the adverse effects of any micro trace minerals contained inside the bolus;
(g) wherein the dried live active yeast particles released inside the reticulo-rumen of the ruminant animal during the extended dosage period break down the feed and forage consumed by the ruminant animal to increase its feed and forage intake and its health and nutrition during the extended dosage period following the triggering stress event.

Such slow-release bolus product for treatment of ruminant animals triggered by a stress event will contain dried live active yeast particles of the *Saccharomyces cerevisiae* or *Saccharomyces boulardii* varieties, preferably of the *Saccharomyces boulardii* variety. The dried live active yeast particles released inside the reticulo-rumen of the ruminant animal during the extended dosage period break down the feed and forage consumed by the ruminant animal to increase its feed and forage intake and its health and nutrition during the extended dosage period following the triggering stress event. Such dried live active yeast particles are preferably coated with the hydrophobic fat or fatty acid material discussed above for stabilizing the dried live active yeast particles against physical and chemical stresses, including heat and compression, during the bolus manufacturing process, and also for slowing down the degradation within the ruminant animal's reticulo-rumen of the bolus product due to the rumen juices, thereby facilitating the slow-release characteristics of the bolus product. Thus, the hydrophobic fat or fatty acid material contributes to a reduction in the degradation of cells in the dried live active yeast particles and enables them to remain viable when the yeast particles are homogeneously incorporated into the bolus, and protects the yeast particles from the adverse effects of any micro trace minerals contained inside the bolus.

The slow-release bolus product for treatment of ruminant animals triggered by a stress event will also contain one or more vitamins, particularly Biotin Vitamin B7, Vitamin B12, other Vitamins B, Vitamin A, Vitamin E, or Vitamin C. The vitamin source supplements the levels of that vitamin derived by the ruminant animal from the feed and forage consumed by the ruminant animal during the extended dosage period. The slow-release bolus product may optionally include macro or micro trace minerals that are directed to supplementing the health of the ruminant animal, or for enhancing the health and nutrition of the ruminant animal during the extended dosage period following the triggering stress event. Examples of such minerals include micro trace minerals like zinc or cobalt, and macro minerals like magnesium.

The slow-release bolus product for treatment of ruminant animals triggered by a stress event will also contain compositional ingredients that provide the biologically induced slow-release compositional mechanism discussed above. Such ingredients that act as binders for the beneficial ingredients like the coated dried live active yeast particles, vitamins, and minerals inside the bolus that are gradually degraded by the rumen juices contained inside the ruminant animal's reticulo-rumen for release at a constant rate throughout the extended dosage period include Dolomite clays, Bentonite clays, Kaolin clays, zeolites, or diatomaceous earth materials that do not constitute a wax, resin, or zein proteinaceous vegetable material. Thus, the compositional ingredients/binding agent is degradable by the rumen juices contained inside the ruminant animal's reticulo-rumen for gradually releasing the particles of dried live active yeast, vitamins, and optional micro trace or macro minerals from the bolus product into the ruminant animal at a predetermined dosage throughout the extended dosage period.

The slow-release bolus product for treatment of ruminant animals triggered by a stress event will also contain an amount of powdered metal oxide discussed above for adding weight to the bolus product, so that it is maintained inside the ruminant animal's reticulo-rumen throughout the extended dosage period without being quickly passed by the ruminant animal through his or her digestive and intestinal systems in the normal course. Such powdered metal oxide materials may comprise iron oxide, magnesium oxide, or zinc oxide.

The size and weight of the slow-release bolus product or treatment of ruminant animals triggered by a stress event will necessarily depend upon the type, weight, and age of the ruminant animal to be treated, and the duration of the extended dosage period after the triggering stress event during which the beneficial ingredients contained inside the bolus product are to be gradually released inside the ruminant animal's reticulo-rumen, blood stream, and other systems.

By being able to administer a single dose of the slow-release bolus product to the ruminant animal that has been triggered by the stress event, the ruminant animal can be left alone for treatment by the beneficial ingredients contained inside the slow-release bolus product throughout the extended dosage period, while its health is restored and feed intake improved without further doses or other veterinary treatments that might aggravate the stress condition of the ruminant animal. In some embodiments, the use of the slow-release bolus product may be non-therapeutic.

The process for preparing the slow-release bolus product of the present invention is generally as follows:
1. Add the dry ingredients of the bolus composition (except the lubricant) together to form a homogenous premix.
2. Add the lubricant to form an admixture for the bolus composition admixture.
3. Introduce the bolus composition admixture into the bolus press machine that is then squeezed into the bolus mold and subsequently pressed under a force of about 250-410 MPa (25-41 metric tonnes per square centimeter), and a maximum temperature of about 45°C at less than 20% relative humidity to produce a pressed bolus.
4. Promptly package the boluses to prevent moisture absorption that could adversely affect the shelf-life stability of the bolus product.

For example, a process for preparing a slow-release bolus product in the form of a pressed shelf-stable solid pill or bolus administered into the reticulo-rumen of a pregnant female ruminant animal comprises:
(a) forming a homogenous premix comprising:
   (i) particles of dried live active yeast precoated with a hydrophobic fat or fatty acid substance with the coating of the hydrophobic fat or fatty acid material separate from the dried live active yeast particles prior to and during the material being sprayed around the exterior of the dried live active yeast particles;
   (ii) at least one vitamin source for supplementing the levels of that vitamin derived by the ruminant animal from the feed and forage consumed by her during the extended dosage period;
   (iii) optionally one or more micro trace minerals for enhancing the health and nutrition of the ruminant animal during the extended dosage period prior to calving and during a lactation cycle by the ruminant animal after calving;
   (iv) A binding agent that is degradable by the rumen juices contained inside the ruminant animal's reticulo-rumen for gradually releasing the particles of dried live active yeast, vitamins, and optional micro trace minerals from the bolus product into the ruminant animal at a predetermined dosage throughout the extended dosage period;
   (v) powdered metal oxide for adding weight to the bolus product, so that the bolus product is maintained inside the ruminant animal's reticulo-rumen throughout the extended dosage period; and
(b) adding a lubricant to the premix to form an admixture;
(c) introducing the bolus composition admixture into a bolus press machine which is then squeezed into the bolus mold and subsequently pressed under a force of about 250-410 MPa (25-41 metric tonnes per square centimeter) and a maximum temperature of about 45 °C at less than about 20% relative humidity to produce a pressed bolus;
(d) packaging the boluses to prevent moisture absorption that could adversely affect the shelf-life stability of the bolus product.

### Examples

### Example 1: In Vitro Testing of Slow-Release Bolus Product

The slow-release bolus product of the present invention containing 21.0 grams of coated live active yeast particles, 7.4 mg of Vitamin B12, 420 mg of Biotin Vitamin B7, 23.6 g of Dolomite clay, 24 g of iron oxide, 12 g of zinc oxide, 12 g of manganese oxide, 3 g of magnesium stearate, and 24 g of canola oil hydrogenated fat of rapeseed oil was subjected to a degradation test at a controlled temperature and pH. A glass container of liquid solution comprising distilled water and various acids for maintaining a pH of 6-6.5 at a temperature of 39 °C for simulating the digestive juices inside the cow's reticulo-rumen was used with a 120 gram bolus subjected to continuous movement of the solution. The bolus was removed daily from the container and weighed over a 22-day test period.

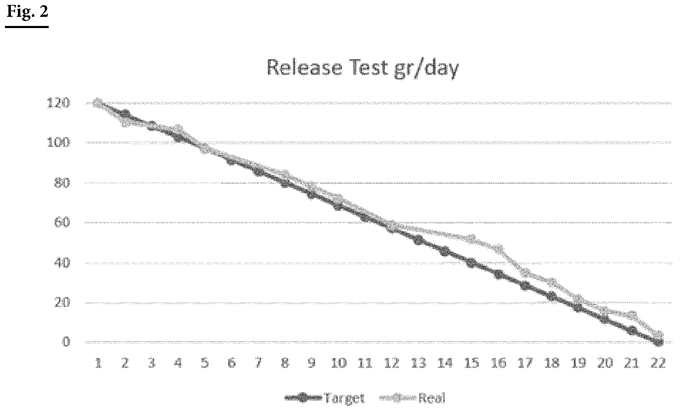

The recorded daily weight data for the bolus is shown in Fig. 2 against a linear target line. The results demonstrate that the bolus dissolved within the simulated digestive juices on a more-or-less constant rate between 120 grams on Day 0 and zero grams on Day 22.

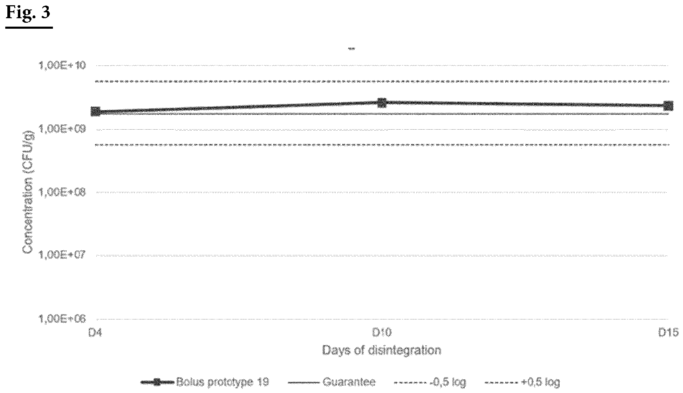

In a separate *in vitro* test, the bolus product containing the composition identified above was maintained inside a glass container containing the solution identified above over a 15-day period. The bolus was removed from the container on Day 4, Day 10, and Day 15 and subjected to active yeast count analysis using the CFU plate count test method to count the number of viable active yeast particles in terms of (cfu/g). The bolus was then returned to the solution in the glass container. The results were 1.90 E + 09 cfu/g on Day 4, 2.63 E + 09 cfu/g on Day 10, and 2.63 E + 09 cfu/g on Day 15. The test results are shown in Fig. 3. The graph shows that the yeast activity in slow-release bolus product remained relatively constant throughout this 15-day slow-release period.

### Example 2: In Vivo Testing of Slow-Release Bolus Product

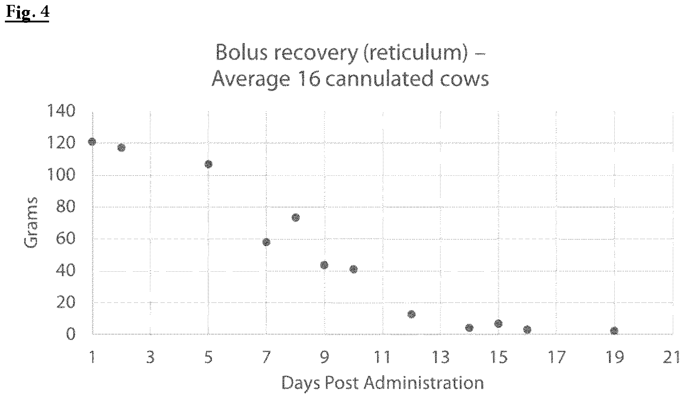

In vivo tests of the slow-release bolus product of the present invention was conducted at the Teagasc Animal & Grassland Research and Innovation Centre in Ireland. A bolus weighing 120 grams and of the composition identified above was placed into the reticulum of sixteen cannulated cows. The bolus was removed from the reticulum through the cannula of each of the test cows and weighed on Days 1, 2, 5, 7, 8, 9, 10, 12, 14, 15, 16, and 19 of the 21-day extended dosage period. The boluses were returned to the cows' reticulum after weighing. The test results are shown in Fig. 4. As can be seen, the weight of the boluses averaged across the 16 test cows decreased with time. But because the boluses broke apart inside the reticulum and the technicians conducting the research protocol were unable to retrieve the entirety of the bolus pieces to weigh them, the true weight of the boluses were underestimated. Therefore, the *in vivo* test results demonstrate a more irregular rate of weight loss over time than the boluses demonstrated by the *in vitro* experiments of Example 1.

### Example 3: Field Testing of the Slow-Release Bolus Product

A farm trial of the slow-release bolus product was conducted on 300 Holstein milking cows in North Spain with 42 cows pre-randomized by parity during the calving season. Thirty-nine of the pre-randomized test cows were analyzed for milk production and health with three of the total number of test cows excluded due to lameness in the first trial period. These test cows were divided between 19 cows receiving the bolus product and 20 cows in the control group that did not receive the bolus product. The cows were also divided between their number of lactation cycles that they had undergone following the birth of a calf as follows:

**Table 2**

| **Treatment** | **# of Cows** | **# of Historic Lactation Cycles for the Test Cow** | |
|---|---|---|---|
| | **All** | **Primiparous** | **Multiparous** |
| Control | 20 | 5 | 15 |
| Bolus | 19 | 5 | 14 |
| **Total** | **39** | **10** | **29** |

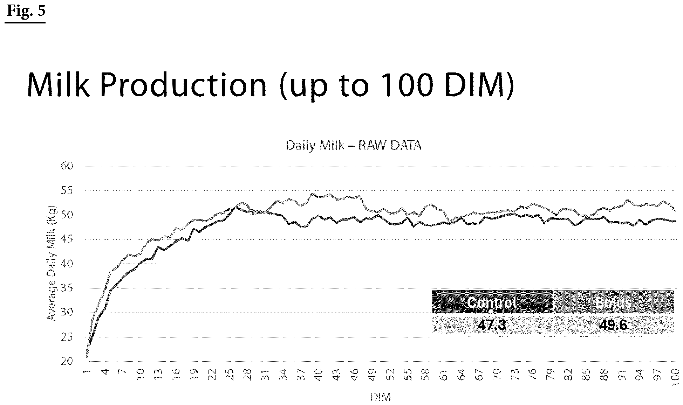

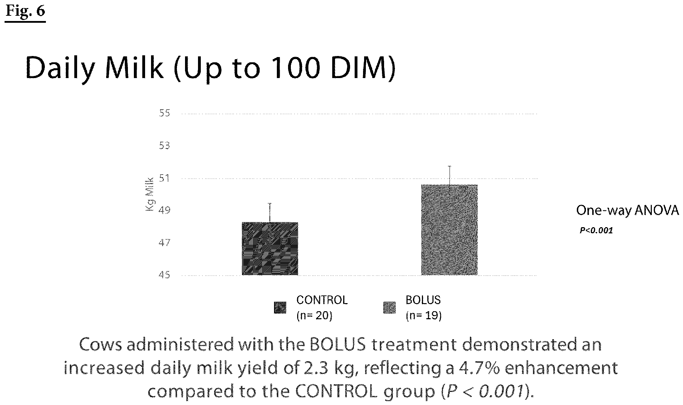

The average daily milk production (kg) for the test cows receiving the bolus product vs. the control cows is shown in Fig. 5 across their days in milk ("DIM"). Across these DIM, the test cows receiving the bolus product averaged 49.6 kg of milk production, while the control cows averaged 47.3 kg of milk production. The 2.3 kg difference demonstrates the value of the slow-release bolus product to a dairy farmer. The farmer could expect to achieve an average of 230 kg of additional milk production for each of his dairy cows during that 100-day DIM milk production, which is significant. This reflects a 4.7% improvement in milk production compared to the control group (*P* < 0.001), as shown in Fig. 6.

In a separate farm trial conducted at a large commercial operation in Hungary. Four hundred thirteen dairy cows were analyzed for fresh cow health across 60 DIM. Three hundred sixty of those cows were analyzed for their milk production as follows:

**Table 3**

| **Treatment** | **# of Cows** | **# of Historic Lactation Cycles for the Test Cow** | |
|---|---|---|---|
| | **All** | **Primiparous** | **Multiparous** |
| Control | 167 | 58 | 109 |
| Bolus | 193 | 75 | 118 |
| **Total** | **360** | **133** | **227** |

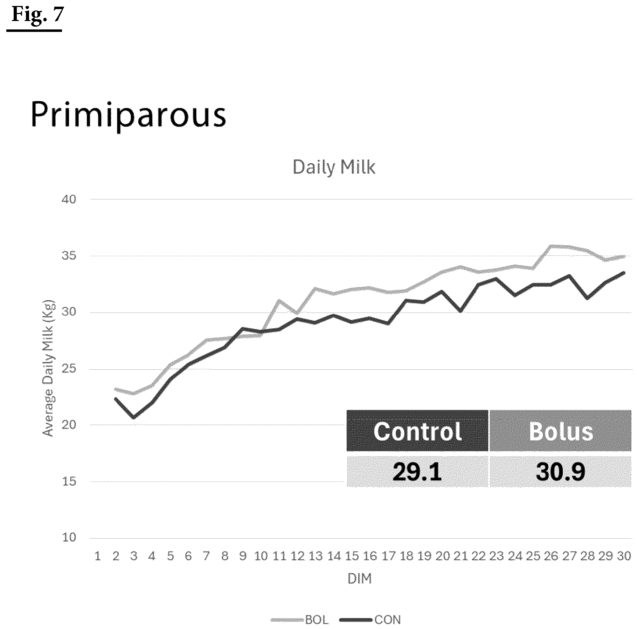

The primiparous cows that gave birth to their first calf are depicted in Fig. 7 with the test cows receiving the bolus product averaged 30.9 kg of milk production, while the control cows averaged 29.1 kg of milk production. The 1.8 kg difference demonstrates the value of the slow-release bolus product to a dairy farmer. The farmer could expect to achieve an average of 54 kg of additional milk production for each of his dairy cows during that 30-day DIM milk production test period, which is significant.

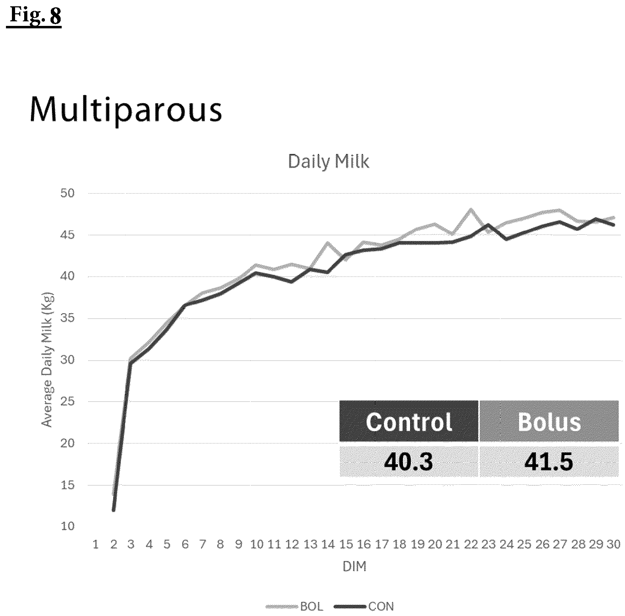

The multiparous cows that entered their 2^{nd}-7^{th} lactations are depicted in Fig. 8 with the test cows receiving the bolus product averaged 41.5 kg of milk production, while the control cows averaged 40.3 kg of milk production. The 1.2 kg difference demonstrates the value of the slow-release bolus product to a dairy farmer for these multiparous cows where one would expect milk production to decrease due to the age of the dairy cow and number of calves that it had borne. The farmer could expect to achieve an average of 36 kg of additional milk production for each of his dairy cows during that 30-day DIM milk production test period, which again is significant.

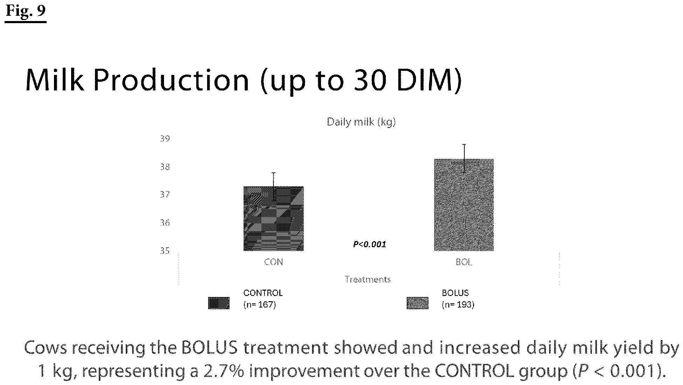

Figure 9 shows the difference in milk production between the cows receiving the bolus product (n = 193) vs. the control group cows (n = 167) for all of the primiparous and multiparous cows combined. The cows receiving the bolus treatment showed an increased daily milk yield of 1 kg over the control group cows, which represents a 2.7% improvement over the control group cows (P < 0.001).

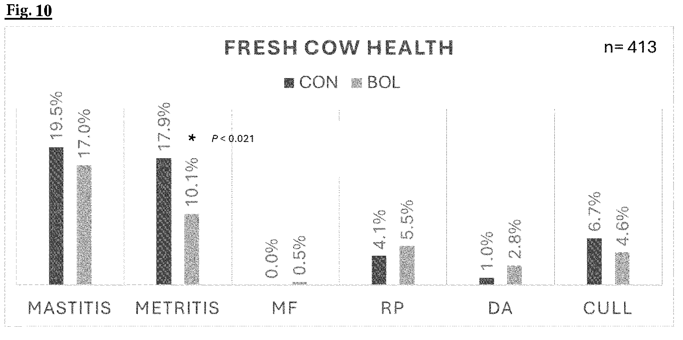

Finally, the bolus group cows and control group cows were evaluated of their health in terms of mastitis (infection of their udders) and metritis (inflammation and infection of their uteruses). The incident of mastitis was 17.0% for the bolus group cows vs. 19.5% for the control group cows. The incident of metritis was 10.1% for the bolus group cows vs. 17.9% for the control group cows. These results are shown in Fig. 10. Among the 4123 total test cows, the incidence of mastitis was 18.2%, while the incidence of metritis was 13.8%. The control group cows showed a significantly higher incidence of metritis than the cows receiving the bolus product treatment (*P* < 0.021). This demonstrates that in addition to achieving significant volumes of increased milk production for the test cows administered the slow-release bolus product of the present invention, the bolus product also yields healthier cows with less need to treat mastitis and metritis that otherwise would impede their milk production.

The invention is defined by the following numbered embodiments:
1. A slow-release bolus product in the form of a shelf-stable solid pill or bolus administered into the reticulo-rumen of a pregnant female ruminant animal within an extended dosage period prior to calving, comprising:
   (a) particles of dried live active yeast precoated with a hydrophobic fat or fatty acid substance with the coating of the hydrophobic fat or fatty acid material separate from the dried live active yeast particles prior to and during the material being sprayed around the exterior of the dried live active yeast particles;
   (b) at least one vitamin source for supplementing the levels of that vitamin derived by the ruminant animal from the feed and forage consumed by her during the extended dosage period;
   (c) optionally one or more micro trace minerals for enhancing the health and nutrition of the ruminant animal during the extended dosage period prior to calving and during a lactation cycle by the ruminant animal after calving;
   (d) A binding agent that is degradable by the rumen juices contained inside the ruminant animal's reticulo-rumen for gradually releasing the particles of dried live active yeast, vitamins, and optional micro trace minerals from the bolus product into the ruminant animal at a predetermined dosage throughout the extended dosage period;
   (e) powdered metal oxide for adding weight to the bolus product, so that the bolus product is maintained inside the ruminant animal's reticulo-rumen throughout the extended dosage period;
   (f) wherein the hydrophobic fat or fatty acid coating contributes to a reduction in the degradation of cells in the dried live active yeast particles and enables them to remain viable when the yeast particles are homogeneously incorporated into the bolus, and protects the yeast particles from the adverse effects of any micro trace minerals contained inside the bolus;
   (g) wherein the dried live active yeast particles released inside the reticulo-rumen of the ruminant animal during the extended dosage period break down the feed and forage consumed by the ruminant animal to increase its feed and forage intake and its health and nutrition for enhancing its milk production during the lactation cycle post-calving.
2. The slow-release bolus product of embodiment 1, wherein the extended dosage period for the ruminant animal comprises about 5-60 days.
3. The slow-release bolus product of embodiment 2, wherein the extended dosage period for the ruminant animal comprises about 21 days.
4. The slow-release bolus product of embodiment 1, wherein the dried live active yeast particles comprise the *Saccharomyces cerevisiae* variety of yeast.
5. The slow-release bolus product of embodiment 4, wherein the *S. cerevisiae* species is denominated CNCMI-1077.
6. The slow-release bolus product of embodiment 1, wherein the amount of dried live active yeast for a 120 gram bolus, whose ingredients are to be administered over a 21-day extended dosage period is about 8.25-25.00% wt of the bolus.
7. The slow-release bolus product of embodiment 1, wherein the source of vitamins inside the bolus comprises Biotin Vitamin B7 and Vitamin B12.
8. The slow-release bolus product of embodiment 7, wherein the amount of Biotin Vitamin B7 for a 120 gram bolus, whose ingredients are to be administered over a 21-day extended dosage period is about 0.175-0.700% wt of the bolus.
9. The slow-release bolus product of embodiment 7, wherein the amount of Vitamin B12 for a 120 gram bolus, whose ingredients are to be administered over a 21-day extended dosage period is about 0.0044-0.0088% wt of the bolus.
10. The slow-release bolus product of embodiment 1, wherein the bolus contains micro trace minerals in the form of zinc oxide and the amount of the zinc oxide for a 120-gram bolus, whose ingredients are to be administered over a 21-day extended dosage period is about 5-14% wt of the bolus.
11. The slow-release bolus product of embodiment 1, wherein the bolus contains micro trace minerals in the form of manganese oxide and the amount of the manganese oxide for a 120 gram bolus, whose ingredients are to be administered over a 21-day extended dosage period is about 5-14% wt of the bolus.
12. The slow-release bolus product of embodiment 1, wherein the binding agent for contributing the slow-release functionality to the bolus comprises Dolomite clays, Bentonite clays, Kaolin clays, zeolites, diatomaceous earth, or calcium carbonate in combination with magnesium oxide.
13. The slow-release bolus product of embodiment 12, wherein the slow-release functionality binder agent comprises Dolomite clays and the amount of the Dolomite clays for a 120 gram bolus, whose ingredients are to be administered over a 21-day extended dosage period is about 10-27% wt of the bolus.
14. The slow-release bolus product of embodiment 12, wherein the slow-release functionality binder agent comprises calcium carbonate in combination with magnesium oxide and the amounts of the calcium carbonate and magnesium oxide for a 120 gram bolus, whose ingredients are to be administered over a 21-day extended dosage period are about 7-18% wt calcium carbonate and about 2-8% wt magnesium oxide with respect to the weight of the bolus.
15. The slow-release bolus product of embodiment 1, wherein the powdered metal oxide contained inside the bolus comprises iron oxide, magnesium oxide, or zinc oxide.
16. The slow-release bolus product of embodiment 15, wherein the powdered metal oxide comprises iron oxide and the amount of the iron oxide for a 120 gram bolus, whose ingredients are to be administered over a 21-day extended dosage period is about 10-30% wt of the bolus.
17. The slow-release bolus product of embodiment 1, wherein the hydrophobic fat or fatty acid precoating material comprises long-chain fatty acids like oleic acid, palmitic acid, stearic acid, linoleic acid, or linolenic acid.
18. The slow-release bolus product of embodiment 17, wherein two or more of said long-chain fatty acids may be used in combination with each other in the hydrophobic fat or fatty acid precoating material.
19. The slow-release bolus product of embodiment 18, wherein the hydrophobic fat or fatty acid precoating material comprises a 50:50 mixture of stearic acid and palmitic acid.
20. The slow-release bolus product of embodiment 1 further comprising a lubricant like magnesium stearate, calcium stearate, sodium benzoate, adipic acid, or polyethylene glycol for the bolus manufacturing process.
21. A slow-release bolus product in the form of a pressed shelf-stable solid pill or bolus administered into the reticulo-rumen of a pregnant female ruminant animal within an extended dosage period prior to calving, comprising for a 120 gram bolus about 8.25-25.00% wt particles of dried live active yeast, about 0.175-0.700% wt of Biotin Vitamin B7, about 0.0044-0.0088% wt of Vitamin B12, about 5-14% wt of zinc oxide, about 5-14% wt of manganese oxide, about 10-27% wt of Dolomite clay slow-release functionality binding agent, and about 10-30% wt of powdered iron oxide, wherein the dried live active yeast particles released inside the reticulo-rumen of the ruminant animal during the extended dosage period break down the feed and forage consumed by the ruminant animal to increase its feed and forage intake and its health and nutrition for enhancing its milk production during the lactation cycle post-calving..
22. The slow-release bolus product of embodiment 21 further comprising a coating formed from a hydrophobic fat or fatty acid substance around the particles of dried live active yeast with the coating of the hydrophobic fat or fatty acid material separate from the dried live active yeast particles prior to and during the material being sprayed around the exterior of the dried live active yeast particles, wherein the hydrophobic fat or fatty acid coating contributes to a reduction in the degradation of cells in the dried live active yeast particles and enables them to remain viable when the yeast particles are homogeneously incorporated into the bolus, and protects the yeast particles from the adverse effects of any micro trace minerals contained inside the bolus.
23. A process for preparing a slow-release bolus product in the form of a pressed shelf-stable solid pill or bolus administered into the reticulo-rumen of a pregnant female ruminant animal, comprising.
   (a) forming a homogenous premix comprising:
      (i) particles of dried live active yeast precoated with a hydrophobic fat or fatty acid substance with the coating of the hydrophobic fat or fatty acid material separate from the dried live active yeast particles prior to and during the material being sprayed around the exterior of the dried live active yeast particles;
      (ii) at least one vitamin source for supplementing the levels of that vitamin derived by the ruminant animal from the feed and forage consumed by her during the extended dosage period;
      (iii) optionally one or more micro trace minerals for enhancing the health and nutrition of the ruminant animal during the extended dosage period prior to calving and during a lactation cycle by the ruminant animal after calving;
      (iv) A binding agent that is degradable by the rumen juices contained inside the ruminant animal's reticulo-rumen for gradually releasing the particles of dried live active yeast, vitamins, and optional micro trace minerals from the bolus product into the ruminant animal at a predetermined dosage throughout the extended dosage period;
      (v) powdered metal oxide for adding weight to the bolus product, so that the bolus product is maintained inside the ruminant animal's reticulo-rumen throughout the extended dosage period; and
   (b) adding a lubricant to the premix to form an admixture;
   (c) introducing the bolus composition admixture into a bolus press machine which is then squeezed into the bolus mold and subsequently pressed under a force of about 250-410 MPa (25-41 metric tonnes per square centimeter) and a maximum temperature of about 45 °C at less than about 20% relative humidity to produce a pressed bolus;
   (d) packaging the boluses to prevent moisture absorption that could adversely affect the shelf-life stability of the bolus product.
24. The ruminant dietary supplement of embodiment 1, wherein the ruminant animal comprises a dairy cow, beef cow, sheep, goat, buffalo, deer, giraffe, gazelle, antelope, or camel.
25. A method of use of a slow-release bolus in the form of a pressed shelf-stable solid pill or bolus administered into the reticulo-rumen of a pregnant female ruminant animal containing particles of dried live active yeast precoated with a hydrophobic fat or fatty acid substance with the coating of the hydrophobic fat or fatty acid material separate from the dried live active yeast particles prior to and during the material being sprayed around the exterior of the dried live active yeast particles, at least one vitamin source for supplementing the levels of that vitamin derived by the ruminant animal from the feed and forage consumed by her during the extended dosage period, optionally one or more micro trace minerals for enhancing the health and nutrition of the ruminant animal during the extended dosage period prior to calving and during a lactation cycle by the ruminant animal after calving, a binding agent that is degradable by the rumen juices contained inside the ruminant animal's reticulo-rumen for gradually releasing the particles of dried live active yeast, vitamins, and optional micro trace minerals from the bolus product into the ruminant animal at a predetermined dosage throughout the extended dosage period, and powdered metal oxide for adding weight to the bolus product, so that the bolus product is maintained inside the ruminant animal's reticulo-rumen throughout the extended dosage period; said method comprising:
   (a) being presented with a pregnant female ruminant animal;
   (b) administering to the pregnant female ruminant animal a dose of the slow-release bolus product during an extended dosage period prior to calving; and;
   (c) wherein the wherein the slow-release bolus product is swallowed by the pregnant female ruminant animal to pass into the reticulo-rumen of the ruminant animal whereupon the slow-release functionality binding agent within the bolus product is gradually degraded by rumen juices inside the reticulo-rumen of the ruminant animal to release the dried live active yeast particles, vitamins, and optional micro trace minerals into the ruminant animal to break down the feed and forage consumed by the ruminant animal to increase its feed and forage intake during the extended dosage period, and pass the vitamins and optional micro trace minerals into the ruminant animal's bloodstream to improve its health and nutrition for enhancing its milk production during the lactation cycle post-calving.
26. The method of embodiment 25, wherein the slow-release bolus product comprises a single administration to the pregnant female ruminant animal during the extended dosage period.
27. A slow-release bolus product in the form of a shelf-stable solid pill or bolus administered into the reticulo-rumen of a ruminant animal within an extended dosage period following a triggering stress event, comprising:
   (a) particles of dried live active yeast precoated with a hydrophobic fat or fatty acid substance with the coating of the hydrophobic fat or fatty acid material separate from the dried live active yeast particles prior to and during the material being sprayed around the exterior of the dried live active yeast particles;
   (b) at least one vitamin source for supplementing the levels of that vitamin derived by the ruminant animal from the feed and forage consumed by the ruminant animal during the extended dosage period;
   (c) optionally one or more micro trace or macro minerals for enhancing the health and nutrition of the ruminant animal during the extended dosage period following the triggering stress event;
   (d) A binding agent that is degradable by the rumen juices contained inside the ruminant animal's reticulo-rumen for gradually releasing the particles of dried live active yeast, vitamins, and optional micro trace or macro minerals from the bolus product into the ruminant animal at a predetermined dosage throughout the extended dosage period;
   (e) powdered metal oxide for adding weight to the bolus product, so that the bolus product is maintained inside the ruminant animal's reticulo-rumen throughout the extended dosage period;
   (f) wherein the hydrophobic fat or fatty acid coating contributes to a reduction in the degradation of cells in the dried live active yeast particles and enables them to remain viable when the yeast particles are homogeneously incorporated into the bolus, and protects the yeast particles from the adverse effects of any micro trace minerals contained inside the bolus;
   (g) wherein the dried live active yeast particles released inside the reticulo-rumen of the ruminant animal during the extended dosage period break down the feed and forage consumed by the ruminant animal to increase its feed and forage intake and its health and nutrition during the extended dosage period following the triggering stress event.
28. The slow-release bolus product of embodiment 27, wherein the extended dosage period for the ruminant animal comprises about 5-21 days.
29. The slow-release bolus product of embodiment 27, wherein the dried live active yeast particles comprise the *Saccharomyces boulardii* variety of yeast.
30. The slow-release bolus product of embodiment 27, wherein the source of vitamins inside the bolus comprises Biotin Vitamin B7, Vitamin B12, other complex-B vitamins, Vitamin A, Vitamin E, or Vitamin C.
31. The slow-release bolus product of embodiment 27, wherein the source of micro trace or macro minerals inside the bolus comprises zinc, cobalt, or magnesium.
32. The slow-release bolus product of embodiment 27, wherein the binding agent for contributing the slow-release functionality to the bolus comprises Dolomite clays, Bentonite clays, Kaolin clays, zeolites, or diatomaceous earth.
33. The slow-release bolus product of embodiment 27, wherein the hydrophobic fat or fatty acid precoating material comprises long-chain fatty acids like oleic acid, palmitic acid, stearic acid, linoleic acid, or linolenic acid.
34. The slow-release bolus product of embodiment 33, wherein two or more of said long-chain fatty acids may be used in combination with each other in the hydrophobic fat or fatty acid precoating material.
35. The ruminant dietary supplement of embodiment 27, wherein the ruminant animal comprises a dairy cow, beef cow, sheep, goat, buffalo, deer, giraffe, gazelle, antelope, or camel.
36. A slow-release bolus product in the form of a shelf-stable solid pill or bolus, comprising:
   (a) particles of dried live active yeast precoated with a hydrophobic fat or fatty acid material with the coating of the hydrophobic fat or fatty acid material separate from the dried live active yeast particles prior to and during the material being sprayed around the exterior of the dried live active yeast particles;
   (b) at least one vitamin source;
   (c) a binding agent that is degradable by the rumen juices contained inside a ruminant animal's reticulo-rumen;
   (d) powdered metal oxide;
   wherein the dried live active yeast particles are released inside the reticulo-rumen of the ruminant animal during an extended dosage period to break down the feed and forage consumed by the ruminant animal.
37. The slow-release bolus product of embodiment 36, further comprising one or more micro trace minerals.
38. The slow-release bolus product of embodiments 36 or 37, wherein the extended dosage period for the ruminant animal comprises about 5-60 days.
39. The slow-release bolus product of embodiment 38, wherein the extended dosage period for the ruminant animal comprises about 21 days.
40. The slow-release bolus product of any one of embodiments 36-39, wherein the dried live active yeast particles comprise the *Saccharomyces cerevisiae* variety of yeast.
41. The slow-release bolus product of embodiment 40, wherein the *S. cerevisiae* species is denominated CNCMI-1077.
42. The slow-release bolus product of any one of embodiments 36-41, wherein the amount of dried live active yeast for a 120 gram bolus, whose ingredients are to be administered over a 21-day extended dosage period is about 8.25-25.00% wt of the bolus.
43. The slow-release bolus product of embodiment 42, wherein the amount of dried live active yeast for a 120 gram bolus, whose ingredients are to be administered over a 21-day extended dosage period is about 13.0-19.0% wt of the bolus.
44. The slow-release bolus product of embodiment 42 or 43, wherein the amount of dried live active yeast for a 120 gram bolus, whose ingredients are to be administered over a 21-day extended dosage period is about 17.0-18.0% wt of the bolus.
45. The slow-release bolus product of any one of embodiments 36-44, wherein the source of vitamins inside the bolus comprises Biotin Vitamin B7 and Vitamin B12.
46. The slow-release bolus product of embodiment 45, wherein the amount of Biotin Vitamin B7 for a 120 gram bolus, whose ingredients are to be administered over a 21-day extended dosage period is about 0.175-0.700% wt of the bolus.
47. The slow release bolus product of embodiment 45 or 46, wherein the amount of Biotin Vitamin B7 for a 120 gram bolus, whose ingredients are to be administered over a 21-day extended dosage period is about 0.26-0.53% wt of the bolus.
48. The slow release bolus product of any one of embodiments 45-47, wherein the amount of Biotin Vitamin B7 for a 120 gram bolus, whose ingredients are to be administered over a 21-day extended dosage period is about 0.35% wt of the bolus.
49. The slow-release bolus product of any one of embodiments 45-48, wherein the amount of Vitamin B12 for a 120 gram bolus, whose ingredients are to be administered over a 21-day extended dosage period is about 0.0044-0.0088% wt of the bolus.
50. The slow-release bolus product of any one of embodiments 45-49, wherein the amount of Vitamin B12 for a 120 gram bolus, whose ingredients are to be administered over a 21-day extended dosage period is about 0.0053-0.0070% wt of the bolus.
51. The slow-release bolus product of any one of embodiments 45-50, wherein the amount of Vitamin B12 for a 120 gram bolus, whose ingredients are to be administered over a 21-day extended dosage period is about 0.0062% wt of the bolus.
52. The slow-release bolus product of any one of embodiments 36-51, wherein the bolus contains micro trace minerals in the form of zinc oxide and the amount of the zinc oxide for a 120-gram bolus, whose ingredients are to be administered over a 21-day extended dosage period is about 5-14% wt of the bolus.
53. The slow-release bolus product of any one of embodiments 36-52, wherein the bolus contains micro trace minerals in the form of manganese oxide and the amount of the manganese oxide for a 120 gram bolus, whose ingredients are to be administered over a 21-day extended dosage period is about 5-14% wt of the bolus.
54. The slow-release bolus product of any one of embodiments 36-53, wherein the binding agent for contributing the slow-release functionality to the bolus comprises Dolomite clays, Bentonite clays, Kaolin clays, zeolites, or diatomaceous earth materials.
55. The slow-release bolus product of embodiment 54, wherein the binding agent comprises Dolomite clays and the amount of the Dolomite clays or calcium carbonate/magnesium oxide) for a 120 gram bolus, whose ingredients are to be administered over a 21-day extended dosage period is about 10-27% wt of the bolus.
56. The slow-release bolus product of any one of embodiments 36-55, wherein the powdered metal oxide contained inside the bolus comprises iron oxide, magnesium oxide, or zinc oxide.
57. The slow-release bolus product of embodiment 56, wherein the powdered metal oxide comprises iron oxide and the amount of the iron oxide for a 120 gram bolus, whose ingredients are to be administered over a 21-day extended dosage period is about 10-30% wt of the bolus.
58. The slow-release bolus product of embodiments 56 or 57, wherein the powdered metal oxide comprises iron oxide and the amount of the iron oxide for a 120 gram bolus, whose ingredients are to be administered over a 21-day extended dosage period is about 15-25% wt of the bolus.
59. The slow-release bolus product of any one of embodiments 56-58, wherein the powdered metal oxide comprises iron oxide and the amount of the iron oxide for a 120 gram bolus, whose ingredients are to be administered over a 21-day extended dosage period is about 20% wt of the bolus.
60. The slow-release bolus product of any one of embodiments 36-59, wherein the hydrophobic fat or fatty acid precoating material comprises long-chain fatty acids such as oleic acid, palmitic acid, stearic acid, linoleic acid, or linolenic acid.
61. The slow-release bolus product of embodiment 60, wherein two or more of said long-chain fatty acids may be used in combination with each other in the hydrophobic fat or fatty acid precoating material.
62. The slow-release bolus product of embodiment 61, wherein the hydrophobic fat or fatty acid precoating material comprises a 50:50 mixture of stearic acid and palmitic acid.
63. The slow-release bolus product of any one of embodiments 36-62, further comprising a lubricant such as magnesium stearate, calcium stearate, sodium benzoate, adipic acid, or polyethylene glycol.
64. A slow-release bolus product in the form of a pressed shelf-stable solid pill or bolus comprising, for a 120 gram bolus, about 8.25-25.00% wt particles of dried live active yeast, about 0.175-0.700% wt of Biotin Vitamin B7, about 0.0044-0.0088% wt of Vitamin B12, about 5-14% wt of zinc oxide, about 5-14% wt of manganese oxide, about 10-27% wt of Dolomite clay slow-release functionality binding agent, and about 10-30% wt of powdered iron oxide, wherein the dried live active yeast particles are released inside the reticulo-rumen of a ruminant animal during an extended dosage period to break down the feed and forage consumed by the ruminant animal.
65. The slow-release bolus product of embodiment 64, further comprising a coating formed from a hydrophobic fat or fatty acid material around the particles of dried live active yeast with the coating of the hydrophobic fat or fatty acid material separate from the dried live active yeast particles prior to and during the material being sprayed around the exterior of the dried live active yeast particles.
66. A slow-release bolus product in the form of a pressed shelf-stable solid pill or bolus comprising, for a 120 gram bolus, about 8.25-25.00% wt particles of dried live active yeast, about 0.175-0.700% wt of Biotin Vitamin B7, about 0.0044-0.0088% wt of Vitamin B12, about 5-14% wt of zinc oxide, about 5-14% wt of manganese oxide, about 2-8% wt of magnesium oxide, about 10-30% iron oxide, about 0.5-5.0% wt of magnesium stearate, and about 10-30% hydrogenated fat of rapeseed oil, wherein the dried live active yeast particles are released inside the retiuclo-rumen of a ruminant animal during an extended dosage period to break down the feed and forage consumed by the ruminant animal.
67. The slow-release bolus product of embodiment 66, further comprising a coating formed from a hydrophobic fat or fatty acid material around the particles of dried live active yeast with the coating of the hydrophobic fat or fatty acid material separate from the dried live active yeast particles prior to and during the material being sprayed around the exterior of the dried live active yeast particles.
68. A process for preparing a slow-release bolus product in the form of a pressed shelf-stable solid pill or bolus administered into the reticulo-rumen of a ruminant animal, comprising:
   (a) forming a homogenous premix comprising:
      (i) particles of dried live active yeast precoated with a hydrophobic fat or fatty acid substance with the coating of the hydrophobic fat or fatty acid material separate from the dried live active yeast particles prior to and during the material being sprayed around the exterior of the dried live active yeast particles;
      (ii) at least one vitamin source;
      (iii) optionally one or more micro trace minerals;
      (iv) a binding agent that is degradable by the rumen juices contained inside the ruminant animal's reticulo-rumen;
      (v) powdered metal oxide; and
   (b) adding a lubricant to the premix to form a bolus composition admixture;
   (c) introducing the bolus composition admixture into a bolus press machine which is then squeezed into the bolus mold and subsequently pressed under a force of about 250-410 MPa (25-41 metric tonnes per square centimeter) and a maximum temperature of about 45 °C at less than about 20% relative humidity to produce a pressed bolus;
   (d) packaging the boluses to prevent moisture absorption that could adversely affect the shelf-life stability of the bolus product.
69. The process of embodiment 68, wherein the slow-release bolus product in the form of a shelf-stable solid pill or bolus administered into the reticulo-rumen of a pregnant female ruminant animal.
70. The process of embodiment 68, wherein the slow-release bolus product in the form of a shelf-stable solid pill or bolus administered into the reticulo-rumen of a ruminant animal following a triggering event.
71. The slow-release bolus product of any one of embodiments 36-67 for use in a method of increasing the food and forage intake of a ruminant animal.
72. The slow-release bolus product of any one of embodiments 36-67 for use in a method of enhancing milk production during the lactation cycle post-calving in a ruminant animal.
73. The slow-release bolus product of any one of embodiments 36-67 for use in a method of increasing the food and forage intake and enhancing milk production during the lactation cycle post-calving in a ruminant animal.
74. The slow-release bolus product for use according to any one of embodiments 71-73, wherein the method comprises a single administration of the slow-release bolus product to a pregnant female ruminant animal during an extended dosage period.
75. The slow-release bolus product for use according to any one of embodiments 71-74, wherein the slow-release bolus product is administered into the reticulo-rumen of a pregnant female ruminant animal within an extended dosage period prior to calving.
76. The slow-release bolus product for use according to any one of embodiments 71-75, wherein the ruminant animal is a dairy cow, beef cow, sheep, goat, buffalo, deer, giraffe, gazelle, antelope, or camel.
77. A method of increasing the food and forage intake of a ruminant animal using the slow-release bolus product of any one of embodiments 36-67.
78. A method of enhancing milk production during the lactation cycle post-calving in a ruminant animal using the slow-release bolus product of any one of embodiments 36-67.
79. A method of increasing the food and forage intake and enhancing milk production during the lactation cycle post-calving in a ruminant animal using the slow-release bolus product of any one of embodiments 36-67.
80. The method of any of embodiments 77-79, wherein the method comprises a single administration of the slow-release bolus product to a pregnant female ruminant animal during an extended dosage period.
81. The method of any of embodiments 77-80, wherein the slow-release bolus product is administered into the reticulo-rumen of a pregnant female ruminant animal within an extended dosage period prior to calving.
82. The method of any of embodiments 77-81, wherein the ruminant animal is a dairy cow, beef cow, sheep, goat, buffalo, deer, giraffe, gazelle, antelope, or camel.
83. The slow-release bolus product of embodiments 36 or 37, wherein the dried live active yeast particles comprise the *Saccharomyces boulardii* variety of yeast.
84. The slow-release bolus product of any one of embodiments 36, 37 or 83, wherein the source of vitamins inside the bolus comprises Biotin Vitamin B7, Vitamin B12, other complex-B vitamins, Vitamin A, Vitamin E, or Vitamin C.
85. The slow-release bolus product of any one of embodiments 36, 37, 83 or 84, further comprising one or more micro trace or macro minerals.
86. The slow-release bolus product of embodiment 85, wherein the source of micro trace or macro minerals inside the bolus comprises zinc, cobalt, or magnesium.
87. The slow-release bolus product of any one of embodiments 36, 37, or 83-86, wherein the binding agent for contributing the slow-release functionality to the bolus comprises Dolomite clays, Bentonite clays, Kaolin clays, zeolites, or diatomaceous earth materials.
88. The slow-release bolus product of any one of embodiments 36, 37, or 83-87, wherein the hydrophobic fat or fatty acid precoating material comprises long-chain fatty acids such as oleic acid, palmitic acid, stearic acid, linoleic acid, or linolenic acid.
89. The slow-release bolus product of embodiment 88, wherein two or more of said long-chain fatty acids may be used in combination with each other in the hydrophobic fat or fatty acid precoating material.
90. The slow-release bolus product of any one of embodiments 36, 37, or 83-89 for use in a method of improving the health and nutritional state of a ruminant animal within an extended dosage period following a triggering stress event.
91. The slow-release bolus product for use according to embodiment 90, wherein the extended dosage period for the ruminant animal comprises about 5-21 days.
92. The slow-release bolus product for use according to any one of embodiments 83-91, wherein the ruminant animal is a dairy cow, beef cow, sheep, goat, buffalo, deer, giraffe, gazelle, antelope, or camel.
93. A method of improving the health and nutritional state of a ruminant animal within an extended dosage period following a triggering stress event using the slow-release bolus product of any one of embodiments 36, 37, or 83-89.
94. The method of embodiment 93, wherein the extended dosage period for the ruminant animal comprises about 5-21 days.
95. The method of embodiments 93 or 94, wherein the ruminant animal is a dairy cow, beef cow, sheep, goat, buffalo, deer, giraffe, gazelle, antelope, or camel.

The above specification provides a complete description of the components and preparation process for the slow-release bolus product of the present invention. Since many embodiments of the invention can be made without departing from the spirit and scope of the invention, the invention resides in the claims herein appended.

## Claims

1. A slow-release bolus product in the form of a shelf-stable solid pill or bolus administered into the reticulo-rumen of a ruminant animal within an extended dosage period, comprising:
(a) particles of dried live active yeast precoated with a hydrophobic fat or fatty acid substance with the coating of the hydrophobic fat or fatty acid material separate from the dried live active yeast particles prior to and during the material being sprayed around the exterior of the dried live active yeast particles;
(b) at least one vitamin source for supplementing the levels of that vitamin derived by the ruminant animal from the feed and forage consumed by the ruminant animal during the extended dosage period;
(c) optionally one or more micro trace minerals for enhancing the health and nutrition of the ruminant animal during the extended dosage period;
(d) a binding agent that is degradable by the rumen juices contained inside the ruminant animal's reticulo-rumen for gradually releasing the particles of dried live active yeast, vitamins, and optional micro trace minerals from the bolus product into the ruminant animal at a predetermined dosage throughout the extended dosage period;
(e) powdered metal oxide for adding weight to the bolus product, so that the bolus product is maintained inside the ruminant animal's reticulo-rumen throughout the extended dosage period;
(f) wherein the hydrophobic fat or fatty acid coating contributes to a reduction in the degradation of cells in the dried live active yeast particles and enables them to remain viable when the yeast particles are homogeneously incorporated into the bolus, and protects the yeast particles from the adverse effects of any micro trace minerals contained inside the bolus;
(g) wherein the dried live active yeast particles released inside the reticulo-rumen of the ruminant animal during the extended dosage period break down the feed and forage consumed by the ruminant animal to increase its feed and forage intake and its health and nutrition.

2. The slow-release bolus product of claim 1, wherein the slow-release bolus product is administered into the reticulo-rumen of a pregnant female ruminant animal within an extended dosage period prior to calving, wherein the one or more micro trace minerals which are optionally present enhance the health and nutrition of the ruminant animal during the extended dosage period prior to calving and during a lactation cycle by the ruminant animal after calving, and
wherein the dried live active yeast particles released inside the reticulo-rumen of the ruminant animal during the extended dosage period break down the feed and forage consumed by the ruminant animal to increase its feed and forage intake and its health and nutrition for enhancing its milk production during the lactation cycle post calving.

3. The slow-release bolus product of claim 2, wherein the extended dosage period for the pregnant ruminant animal comprises about 5-60 days, preferably about 21 days.

4. The slow-release bolus product of claim 1, wherein the slow-release bolus product is administered into the reticulo-rumen of a ruminant animal within an extended dosage period following a triggering stress event,
wherein the one or more micro trace minerals which are optionally present enhance the health and nutrition of the ruminant animal during the extended dosage period following the triggering stress event, and
wherein the dried live active yeast particles released inside the reticulo-rumen of the ruminant animal during the extended dosage period break down the feed and forage consumed by the ruminant animal to increase its feed and forage intake and its health and nutrition during the extended dosage period following the triggering stress event.

5. The slow-release bolus product of claim 4, wherein the extended dosage period for the ruminant animal undergoing the triggering stress event comprises about 5-21 days.

6. The slow-release bolus product of claims 2 or 3, wherein the dried live active yeast particles comprise the *Saccharomyces cerevisiae* variety of yeast for the bolus administered to the pregnant ruminant animal, or the slow-release bolus product of claims 4 or 5, wherein the dried live active yeast particles comprise the *Saccharomyces boulardii* variety of yeast for the bolus administered to the ruminant animal undergoing the triggering event.

7. The slow-release bolus product of claim 6, wherein the *S. cerevisiae* species is denominated CNCMI-1077.

8. The slow-release bolus product of claim 1, wherein the amount of dried live active yeast for a 120 gram bolus, whose ingredients are to be administered over a 21-day extended dosage period is about 8.25-25.00% wt of the bolus.

9. The slow-release bolus product of claims 2, 3, or 6-8, wherein the source of vitamins inside the bolus comprises Biotin Vitamin B7 and Vitamin B12 for the bolus administered to the pregnant ruminant animal, or the slow-release bolus product of claims 4-8, wherein the source of vitamins inside the bolus comprises Biotin Vitamin B7, Vitamin B12, other complex-B vitamins, Vitamin A, Vitamin E, or Vitamin C for the bolus administered to the ruminant animal undergoing the triggering event.

10. The slow-release bolus product of claim 9, wherein the amount of Biotin Vitamin B7 for a 120 gram bolus, whose ingredients are to be administered over a 21-day extended dosage period is about 0.175-0.700% wt of the bolus.

11. The slow-release bolus product of claim 9, wherein the amount of Vitamin B12 for a 120 gram bolus, whose ingredients are to be administered over a 21-day extended dosage period is about 0.0044-0.0088% wt of the bolus.

12. The slow-release bolus product of claim 1, wherein the bolus contains micro trace minerals in the form of zinc oxide with the amount of the zinc oxide for a 120-gram bolus, whose ingredients are to be administered over a 21-day extended dosage period is about 5-14% wt of the bolus, manganese oxide with the amount of the manganese oxide for a 120 gram bolus, whose ingredients are to be administered over a 21-day extended dosage period is about 5-14% wt of the bolus, or cobalt.

13. The slow-release bolus product of claim 1, wherein the bolus contains macro trace minerals in the form of magnesium.

14. The slow-release bolus product of claim 1, wherein the binding agent for contributing the slow-release functionality to the bolus comprises Dolomite clays, Bentonite clays, Kaolin clays, zeolites, diatomaceous earth, or calcium carbonate in combination with magnesium oxide, wherein if the slow-release functionality binder agent comprises Dolomite clays and the amount of the Dolomite clays for a 120 gram bolus, whose ingredients are to be administered over a 21-day extended dosage period is about 10-27% wt of the bolus, and if the slow-release functionality binder agent comprises calcium carbonate in combination with magnesium oxide, the amounts of the calcium carbonate and magnesium oxide for a 120 gram bolus, whose ingredients are to be administered over a 21-day extended dosage period are about 7-18% wt calcium carbonate and about 2-8% wt magnesium oxide with respect to the weight of the bolus.

15. The slow-release bolus product of claim 1, wherein the powdered metal oxide contained inside the bolus comprises iron oxide, magnesium oxide, or zinc oxide.

16. The slow-release bolus product of claim 15, wherein the powdered metal oxide comprises iron oxide and the amount of the iron oxide for a 120 gram bolus, whose ingredients are to be administered over a 21-day extended dosage period is about 10-30% wt of the bolus.

17. The slow-release bolus product of claim 1, wherein the hydrophobic fat or fatty acid precoating material comprises long-chain fatty acids like oleic acid, palmitic acid, stearic acid, linoleic acid, or linolenic acid.

18. The slow-release bolus product of claim 17, wherein two or more of said long-chain fatty acids may be used in combination with each other in the hydrophobic fat or fatty acid precoating material.

19. The slow-release bolus product of claim 18, wherein the hydrophobic fat or fatty acid precoating material comprises a 50:50 mixture of stearic acid and palmitic acid.

20. The slow-release bolus product of claim 1 further comprising a lubricant like magnesium stearate, calcium stearate, sodium benzoate, adipic acid, or polyethylene glycol for the bolus manufacturing process.

21. The ruminant dietary supplement of claim 1, wherein the ruminant animal comprises a dairy cow, beef cow, sheep, goat, buffalo, deer, giraffe, gazelle, antelope, or camel.

22. A process for preparing a slow-release bolus product in the form of a pressed shelf-stable solid pill or bolus administered into the reticulo-rumen of a pregnant female ruminant animal, or following a triggering event, comprising:
(a) forming a homogenous premix comprising:
(i) particles of dried live active yeast precoated with a hydrophobic fat or fatty acid substance with the coating of the hydrophobic fat or fatty acid material separate from the dried live active yeast particles prior to and during the material being sprayed around the exterior of the dried live active yeast particles;
(ii) at least one vitamin source for supplementing the levels of that vitamin derived by the ruminant animal from the feed and forage consumed by her during the extended dosage period;
(iii) optionally one or more micro trace minerals for enhancing the health and nutrition of the ruminant animal during the extended dosage period prior to calving and during a lactation cycle, or during the extended dosage period following the triggering stress event, by the ruminant animal after calving;
(iv) A binding agent that is degradable by the rumen juices contained inside the ruminant animal's reticulo-rumen for gradually releasing the particles of dried live active yeast, vitamins, and optional micro trace minerals from the bolus product into the ruminant animal at a predetermined dosage throughout the extended dosage period;
(v) powdered metal oxide for adding weight to the bolus product, so that the bolus product is maintained inside the ruminant animal's reticulo-rumen throughout the extended dosage period; and
(b) adding a lubricant to the premix to form an admixture;
(c) introducing the bolus composition admixture into a bolus press machine which is then squeezed into the bolus mold and subsequently pressed under a force of about 25-41 metric tonnes per square centimeter and a maximum temperature of about 45 °C at less than about 20% relative humidity to produce a pressed bolus;
(d) packaging the boluses to prevent moisture absorption that could adversely affect the shelf-life stability of the bolus product.

23. A method of use of a slow-release bolus in the form of a pressed shelf-stable solid pill or bolus administered into the reticulo-rumen of a pregnant female ruminant animal, or following a triggering event, containing particles of dried live active yeast precoated with a hydrophobic fat or fatty acid substance with the coating of the hydrophobic fat or fatty acid material separate from the dried live active yeast particles prior to and during the material being sprayed around the exterior of the dried live active yeast particles, at least one vitamin source for supplementing the levels of that vitamin derived by the ruminant animal from the feed and forage consumed by her during the extended dosage period, optionally one or more micro trace minerals for enhancing the health and nutrition of the ruminant animal during the extended dosage period prior to calving and during a lactation cycle by the ruminant animal after calving, a binding agent that is degradable by the rumen juices contained inside the ruminant animal's reticulo-rumen for gradually releasing the particles of dried live active yeast, vitamins, and optional micro trace minerals from the bolus product into the ruminant animal at a predetermined dosage throughout the extended dosage period, and powdered metal oxide for adding weight to the bolus product, so that the bolus product is maintained inside the ruminant animal's reticulo-rumen throughout the extended dosage period; said method comprising:
(a) being presented with a pregnant female ruminant animal, or a ruminant animal following a triggering event,;
(b) administering to the pregnant female ruminant animal, or a ruminant animal following a triggering event, a dose of the slow-release bolus product during an extended dosage period prior to calving or an extended dosage period following the triggering event; and;
(c) wherein the wherein the slow-release bolus product is swallowed by the pregnant female ruminant animal or the ruminant animal following the triggering event to pass into the reticulo-rumen of the ruminant animal whereupon the slow-release functionality binding agent within the bolus product is gradually degraded by rumen juices inside the reticulo-rumen of the ruminant animal to release the dried live active yeast particles, vitamins, and optional micro trace minerals into the ruminant animal to break down the feed and forage consumed by the ruminant animal to increase its feed and forage intake during the extended dosage period, and pass the vitamins and optional micro trace minerals into the ruminant animal's bloodstream to improve its health and nutrition for enhancing its milk production during the lactation cycle post-calving, or to improve its health and nutrition following the triggering event.

24. The method of claim 23, wherein the slow-release bolus product comprises a single administration to the pregnant female ruminant animal or the ruminant animal following the triggering event during the extended dosage period.
